Europäisches Patentamt

European Patent Office

Office européen des brevets

(11) Publication number: **0 166 169**
**B1**

# EUROPEAN PATENT SPECIFICATION

(45) Date of publication of patent specification: **06.09.89**

(51) Int. Cl.⁴: **G 01 T 1/17**

(21) Application number: **85106029.3**

(22) Date of filing: **15.05.85**

(54) **A method and circuit for processing pulses in pulse pile-up situations.**

(30) Priority: **29.05.84 US 614888**

(43) Date of publication of application:
**02.01.86 Bulletin 86/01**

(45) Publication of the grant of the patent:
**06.09.89 Bulletin 89/36**

(84) Designated Contracting States:
**DE FR GB IT NL**

(56) References cited:
**EP-A-0 029 244**
**EP-A-0 121 703**
**US-A-3 525 047**
**US-A-3 984 689**

**NUCLEAR INSTRUMENTS & METHODS, vol.
131, December 1975, pages 535-539, North
Holland Publishing Co., Amsterdam, NL; L.
HARMS-RINGDAHL: "A simple instrument for
correction of dead time losses in time
measurement"**

(73) Proprietor: **Siemens Aktiengesellschaft
Wittelsbacherplatz 2
D-8000 München 2 (DE)**

(72) Inventor: **Arseneau, Roger E.
511 Ivy Avenue
Arlington Heights Illinois 60004 (US)**

(56) References cited:
**INSTRUMENT AND EXPERIMENTAL
TECHNIQUE, vol. 22, November 1979, pages
1491-1507, Plenum Publishing Corp., New
York, US; V.B. IVANOV et al.: "Counting errors
in amplitude spectrometry of pulses (survey)"**

Courier Press, Leamington Spa, England.

# Description

## Background of the invention

### 1. Field of the invention

The invention relates to a method and circuit for processing pulses in pulse pile-up situations. In particular, the invention relates to a method and circuit for processing pulses derived from a radiation, such as a scintillation gamma camera.

### 2. Description for the prior art

The U.S. Patent 3,984,689 describes a scintillation camera for high activity sources which comprises a circuit for dumping both the preceding and the succeeding pulse piled-up in cases of detected pulse pile-up situations.

EP—A—0 121 703 which is relevant under article 54.3 EPC describes a method and circuit for processing pulses in pulse pile-up situations where both the preceding pulse and the succeeding pulse piled-up are processed by adding or subtracting pulse tails simulated in RC circuits.

U.S. Patents 3,525,047 from which the preambles of present claims 1, 9 and 32 are derived describes a method and circuit for processing pulses in pulse pile-up situations on the basis of subtracting a facsimile pulse from a pulse which is going to be processed.

The Journal "Nuclear Instruments & Methods", Vol. 131, 1975, pages 535—539 depicts a method and circuit for the correction of dead time losses during radiation measurements in synchronism with a start time for time zero.

## Summary of the invention

### 1. Objects

It is an object of this invention to provide a method and circuit for processing pulses in pulse pile-up situations where both a preceding pulse and a succeeding pulse piled-up can be processed with highest accuracy.

It is another object of the invention to provide a method and circuit for digitally processing pulses in pulse pile-up situations with highest accuracy.

It is still another object of this invention to provide a method and circuit for digitally processing pulses derived from a radiation detector, such as a scintillation gamma camera, in pulse pile-up situations with highest accuracy.

### 2. Summary

According to this invention a method for processing pulses in pulse pile-up situations is provided comprising the steps of detecting of a pulse pile-up situation and of sampling each pulse characterized in that it further comprises the steps of:

a) sampling each pulse with a second frequency which is a subfrequency of a first frequency;

b) measuring, in synchronism with said first and second frequencies, the start time of sampling;

c) counting the number of samples after start time of sampling;

d) measuring, in synchronism with said first and second frequencies, the start time of a pulse pile-up on a preceding pulse in a detected pulse pile-up situation;

e) storing the number of samples counted until start time of said pulse piled-up on said preceding pulse;

f) correcting said preceding pulse by adding corresponding tail samples reconstructed from previously stored samples of another preceding pulse to the samples of the preceding pulse after the start time.

g) correcting said pulse which is piled up by subtracting from said pulse the tail samples added to the preceding pulse.

Also, according to this invention a circuit for processing pulses in pulse pile-up situations is provided which includes means for detecting of a pulse pile-up situation and means for sampling each pulse, characterized in that it further includes:

a) means for sampling each pulse with a second frequency which is a subfrequency of a first frequency;

b) means for measuring, in synchronism with the first and second frequencies, the start time of sampling;

c) means for counting the number of samples after start time of sampling;

d) means for measuring, in synchronism with the first and second frequencies, the start time of a pulse piled-up on a preceding pulse in a detected pulse pile-up situation;

e) means for storing the number of samples counted until start time of said pulse piled-up on said preceding pulse;

f) means for correcting said preceding pulse by adding corresponding tail samples reconstructed from previously stored samples of another preceding pulse to the samples of the preceding pulse after the start time.

g) means for correcting said pulse which is piled up by subtracting from said pulse the tail samples added to the preceding pulse.

Measuring the start times of pulses in synchronism with first and second frequencies according to the invention guarantees exact time information, especially with respect to the occurrence time of pulses piled-up between two succeeding samples. Under these circumstances, the invention allows for processing pulses in pulse pile-up situations where both a preceding pulse and a succeeding pulse pile-up can be processed with highest accuracy. Also, a digitally processing with highest accuracy is possible. Therefore, the invention is particularly applicable for digitally processing pulses derived from a radiation detector, such as a scintillation gamma camera.

In a special embodiment of the invention a third frequency is generated as a subfrequency of the first frequency and the start time of sampling and the start time of a pulse piled-up are measured in synchronism with the first, second and third frequencies. The third frequency lies between the first and second frequencies.

Another special embodiment of the invention further comprises the steps of:

a) generating a start pulse at the occurrence of the pulse to be processed;

b) generating at the occurrence of the start pulse a first pulse series having a first pulse repetition frequency;

c) generating from the first pulse series a second pulse series having a second pulse repetition frequency which is a subfrequency of the first pulse repetition frequency; and

d) sampling the pulse with the second pulse repetition frequency.

In still another special embodiment according to claim 5 of the invention the start time of sampling is measured by measuring the status of the first and second pulse series at the occurrence of the start pulse and the start time of a pulse piled up on the preceding pulse is measured by measuring the status of the first and second pulse series at the occurrence of said pulse which is piled-up. Also a pulse pile-up signal is generated at the occurrence of a pulse piled-up and the start time of a pulse pile-up is measured by measuring the status of the first and second pulse series at the occurrence of the pulse pile-up signal.

Further embodiments of the invention are defined in claims 6—8 and 10—33.

The foregoing and other objects, features and advantages of the invention will be apparent from the following more particular description of a preferred embodiment of the invention, as illustrated in the accompanying drawings.

Brief description of the drawings

In the drawings:

Fig. 1 is a schematic circuit diagram comprising an analog circuit portion (Fig. 1A) and a digital circuit portion (Fig. 1B) of a digital scintillation gamma camera including the invention;

Fig. 2 is a more detailed circuit diagram of the inner structure of a digital integrator as shown in Fig. 1B;

Fig. 3 is a more detailed circuit diagram of the inner structure of the signal processing circuit in Fig. 1B;

Fig. 4 is a more detailed circuit diagram of the inner structure of the integrator control circuit as shown in Fig. 1B;

Fig. 5 is a pulse diagram illustrating a pulse pile-up situation;

Fig. 6 is a more detailed circuit diagram of the inner structure of the pulse pile-up detector circuit in Fig. 1B;

Fig. 7 is a still more detailed circuit diagram of the inner structure of the pulse pile-up detector circuit according to Fig. 6;

Fig. 8 is a more detailed circuit diagram of the inner structure of the position calculator in Fig. 3;

Fig. 9 is a diagram showing data information processed in the position calculator of Fig. 8;

Fig. 10 is a more detailed circuit diagram of the inner structure of the ZLC calculator which corrects the nonlinearities of the Z-signal in Fig. 3; and

Fig. 11 is a more detailed circuit diagram of the inner structure of the dynamic threshold generator in Fig. 1A.

Detailed description of the preferred embodiment

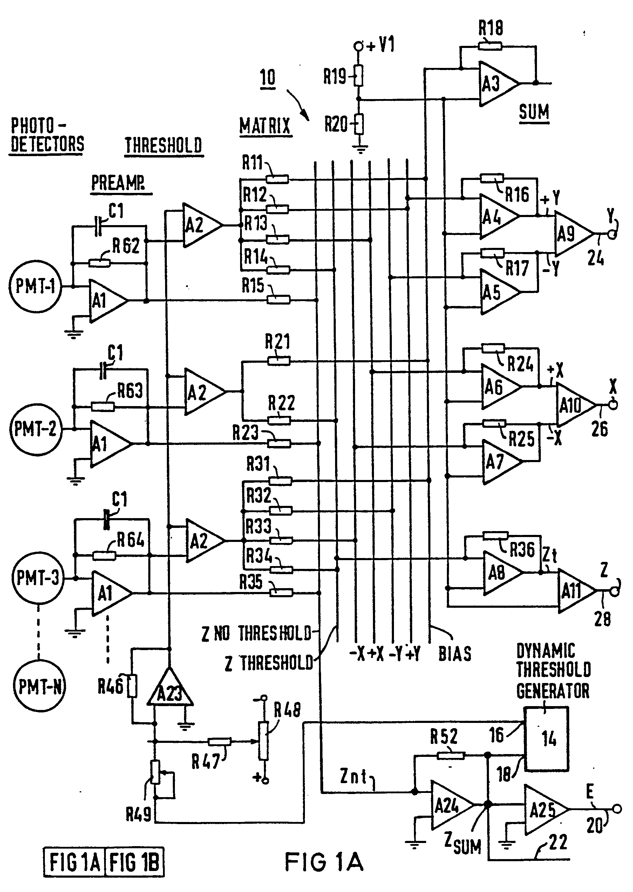

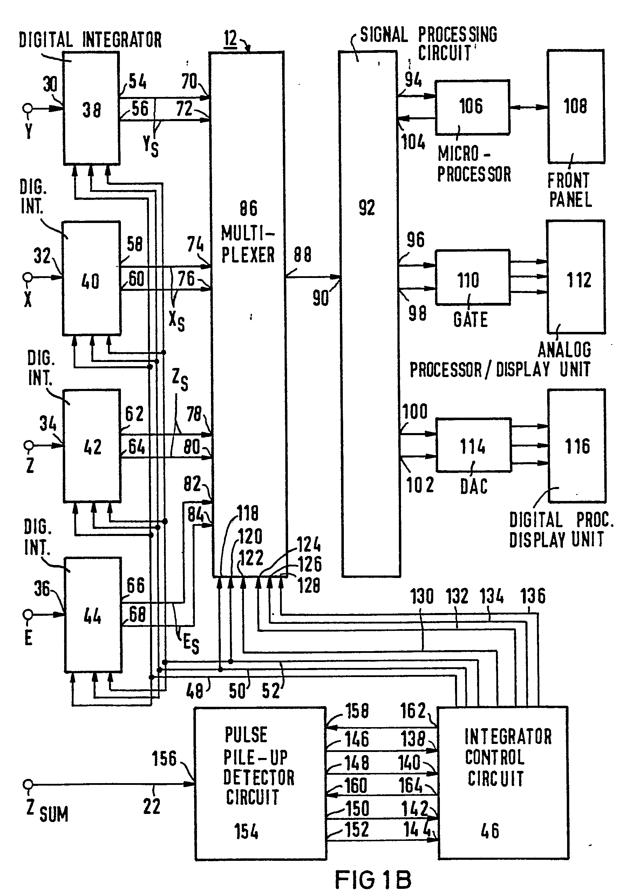

Fig. 1 illustrates in a schematic circuit a digital scintillation gamma camera which comprises an analog circuit portion 10, (Fig. 1A) and a digital circuit portion 12 (Fig. 1B).

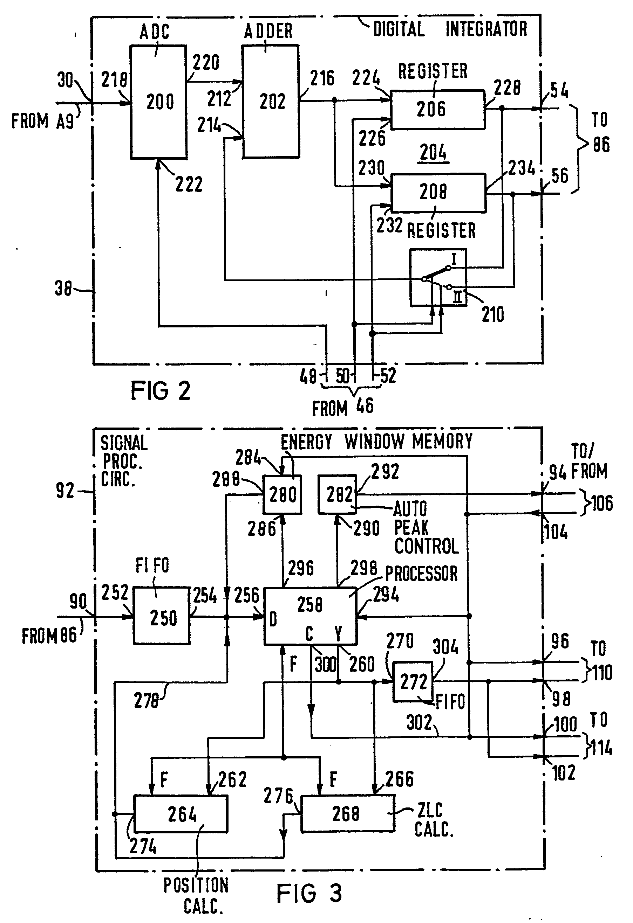

According to Fig. 1A (which is very similar to Fig. 2A of the aforementioned US Patent 3,984,689) the analog circuit portion 10 comprises a number N (e.g. N=19—37) of photomultiplier tubes PMT-1 to PMT-N which are arranged in a hexagonal array behind a (not shown) scintillation crystal. The outputs of the photomultiplier tubes are connected in conventional manner via preamplifiers A1 and threshold amplifiers A2 with a matrix of weighting resistors (e.g. only R11 through R35 are indicated for the first three photomultiplier tubes PMT-1, PMT-2, PMT-3). Each preamplifier A1 comprises a feedback loop with a capacitor C1 and an ohmic resistor R62, R63, R64, etc.

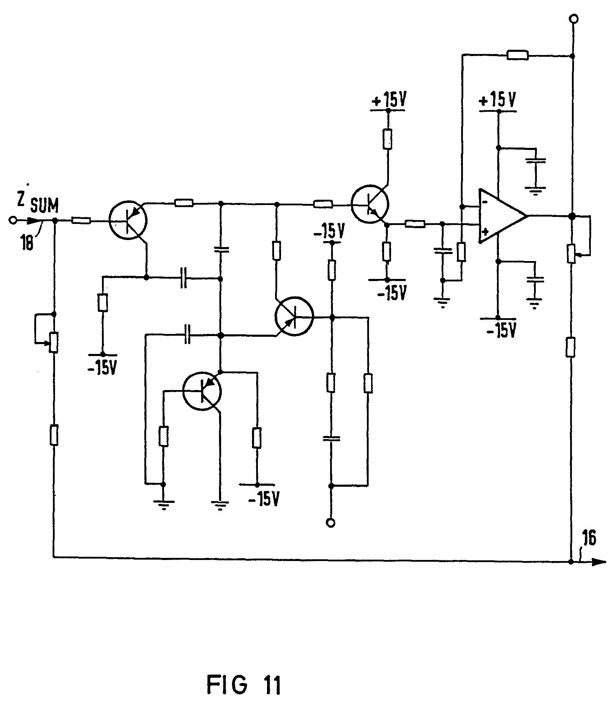

The thresholds of the threshold amplifiers A2 can be adjusted by means of amplifier circuit A23, R46, R47, R48, R49 and dynamic threshold generator 14 (which is illustrated in more detail in Fig. 11) via threshold generator output 16. An input 18 of the dynamic threshold generator 14 is connected with the output of amplifier A24 which comprises feedback resistor R52. The output signal of amplifier A24 is the total energy signal $Z_{sum}$. The amplifier input signal is the no threshold energy output signal $Z_{nt}$ of the resistor matrix.

The total energy signal $Z_{sum}$ is also supplied to a buffer amplifier A25 having an output 20 and to a signal line 22. The energy signal at the output 20 of buffer amplifier A25 is generally designated with E.

The output signals $\pm X$, $\pm Y$ and $Z_t$ of the resistor matrix are supplied via amplifiers A4 to A8 (having feedback resistors R16, R17, R24, R25, R36 and being biased by means of biasing circuit A3, R18, R19, R20) to suming amplifiers A9, A10, A11 for generating analog position coordinate signals X and Y at outputs 24, 26 and an analog threshold energy signal Z at output 28.

As illustrated in Fig. 1B the position coordinate signals Y, X, and the threshold energy signal Z at the outputs 24, 26, 28 of summing amplifiers A9, A10, A11 and the energy signal E at output 20 of buffer amplifier A25 are supplied to inputs 30, 32, 34 and 36 of a first digital integrator 38, a second digital integrator 40, a third digital integrator 42 and a fourth digital integrator 44, respectively. Each digital integrator 38, 40, 42 and 44 (which comprises an input analog-to-digital converter as will be described in more detail with respect to Fig. 2) together with an integrator control circuit 46 forms an integrator circuit. The integrator control circuit 46 is connected with each digital integrator 38, 40, 42 and 44 by means of a first output bus 48, a second output bus 50 and a third output bus 52.

First and second outputs 54, 56 for the digitally integrated position coordinate signal $Y_s$ of integrator 38, first and second outputs 58, 60 for the digitally integrated position coordinate signal $X_s$ of integrator 40, first and second outputs 62, 64 for the digitally integrated threshold energy signal $Z_s$ of integrator 42 and first and second outputs 66, 68 for the digitally integrated energy signal $E_s$ of the digital integrator 44 are connected with corresponding inputs 70 to 84 of a multiplexer 86. An output 88 of the multiplexer 86 is connected with the input 90 of a signal processing circuit 92. The signal processing circuit 92 comprises outputs 94 to 102 and a further input 104.

The output 94 and the further input 104 of the signal processing circuit 92 are connected via a microprocessor 106 with the front panel 108 of the scintillation gamma camera control unit (not shown) for communication. The outputs 96 and 98 of the signal processing unit 92 are connected via gate 110 with a digital processing and/or display unit 112 and the outputs 100 and 102 are connected via a digital-to-analog converter 114 with an analog processing and/or display unit 116.

The multiplexer 86 comprises further inputs 118 to 128. The inputs 118, 120 are connected with the second and third output buses 50 and 52, respectively, of the integrator control circuit 46. The inputs 122, 124, 126 and 128 are connected with a fourth, fifth, sixth and seventh output buses 130, 132, 134 and 136 of the integrator control circuit 46, respectively.

The integrator control circuit 46 also comprises inputs 138 to 144 which are connected with outputs 146—152 of a pulse pile-up detector circuit 154. A first input 156 of the pulse pile-up detector circuit 154 is connected via line 22 with the output of amplifier A24 (Fig. 1A). This first input 156 therefore receives the total energy signal $Z_{sum}$ of the analog circuit portion 10 of Fig. 1A. The pulse pile-up detector circuit 154 also comprises a second input 158 and a third input 160 which are connected with further outputs 162 and 164 of the integrator control circuit 46.

Fig. 2 illustrates in more detail the internal structure of the first digital integrator 38. The second, third and fourth digital integrators 40, 42 and 44 in Fig. 1B have the same structure, respectively.

According to Fig. 2 the integrator 38 comprises an analog-to-digital converter 200. It further comprises a digital adder 202 and a digital storing device 204. The digital storing device 204 includes a first digital register 206, a second digital register 208 and a switch 210 (selector switch).

The digital adder 202 comprises a first digital input 212 and a second digital input 214. It further has a digital output 216.

The analog-to-digital converter 200 includes an input 218 and an output 220. It further includes a control input 222.

The first digital register 206 comprises a digital input 224, an enable input 226, and a digital output 228. In the same manner the second digital register 208 contains a digital input 230, an enable input 232 and a digital output 234.

According to Fig. 2 the output 220 of the analog-to-digital converter 200 is connected with the first digital input 212 of the digital adder 202. The second digital input 214 of the digital adder 202 is connected with the digital output 228 of the first digital register 206 when switch 210 is in switch position I. The second digital input 214 of the digital adder 202 is connected with the digital output 234 of the second digital register 208 when the switch 210 is in position II.

The digital output 216 of the digital adder 202 is connected with both the digital input 224 of the first digital register 206 and the digital input 230 of the second digital register 208. By enabling the first digital register 206 via enable input 226 and non enabling the second digital register 208 the first digital register 206 takes over digital data from digital adder 202. By enabling the second digital register 208 via enable input 232 and non enabling the first digital register 206, the second digital register 208 correspondingly takes over digital information from digital adder 202.

The first and second digital registers 206 and 208 are alternatingly enabled on an event to event basis by integrator control circuit 46 via second and third output buses 50, 52 for time periods which correspond with the time periods being necessary for integrating a radiation event. For example the enabling time period for each digital register 206 or 208 is approximately 700 ns. However, in case of a pulse pile-up situation an earlier switching from one register to the other one is triggered by the integrator control 46 as will be described later in more detail.

The digital outputs 228 and 234 of the first and second digital registers 206 and 208 are switched simultaneously by switch 210.

That means that in time periods where the first digital register 206 is enabled, the digital output 228 of the first digital register 206 is connected with the second digital input 214 of the digital adder 202. Therefore the digital output signals of enabled first digital register 206 during first register enable time period are refed via second digital input 214 to the digital adder 202 for being added to a succeeding digital signal delivered from output 220 of the analog-to-digital converter 200 to the digital adder 202 via first digital input 212.

Correspondingly, in time periods where the second digital register 208 is enabled, the digital output 234 of this register 208 is switched to the second digital input 214 of the digital adder 202. The digital output signals of the second digital register 208 are now added in digital adder 202 to succeeding digital output signals of the analog-to-digital converter 200.

The sample rate of the analog-to-digital converter 200 which is controlled by the integrator control circuit 46 via bus 48 is for example 30 MHz, i.e. approximately 21 samples for a normal unpiled event. The number of samples can be decreased for the reason of detection of a pulse pile-up which will be explained later in more detail.

The digital output signals of the first and second digital registers 206, 208 are also supplied to integrator outputs 54 and 56 (register read out outputs) and from there via multiplexer 86 to the signal processing circuit 92 for further processing. Therefore, alternatingly in time periods where one register is fed with new information from digital adder 202 the other register can be read out via its associated read out output 54 or 56.

Fig. 3 depicts the signal processing circuit 92 in more detail. According to Fig. 3 the signal processing circuit 92 comprises in line with its input 90 a first in/first out memory 250 (FIFO) which has a signal input 252 and a signal output 254. The signal output 254 of the FIFO 250 is connected with the data bus input 256 of a high speed processor 258. The data bus output 260 of the high speed processor 258 is connected with data bus input 262 of a position calculator 264, data bus input 266 of a ZLC calculator 268 and data bus input 270 of another first in/first out memory 272 (FIFO). The data bus output 274 of the position calculator 264 and the data bus output 276 of the ZLC calculator 268 are connected via bus 278 with the data bus input 256 of the high speed processor 258.

The signal processing circuit 92 also comprise an energy window memory 280 and an auto peak control unit 282 for calibrating purposes. The energy window memory 280 has a first data bus input 284, a second data bus input 286 and a data bus output 288. The auto peak control unit 282 has a data bus input 290 and a data bus output 292.

According to Fig. 3 the first data bus input 284 of the energy window memory 280 is connected with input 104 and the output 292 of the auto peak control unit 282 is connected with output 94 of the signal processing circuit 92. Input 104 of the signal processing circuit is also connected with another input 294 of the high speed processor 258. Under these circumstances the high speed processor 258, the energy window memory 280 and the auto peak control unit 282 are able to communicate with the front panel 108 via microprocessor 106.

The second data input 286 of the energy window memory is connected with a further output 296 of the high speed processor 258. The data bus input 290 of the auto peak control unit 282 is also connected with still another output 298 of the high speed processor 258. Furthermore, the data bus output 288 of the window memory 280 is connected with the data but input 256 of the high speed processor 258.

The high speed processor 258 also comprises a clock output 300 with clock transmission line 302.

The data bus output 304 of the FIFO 272 is connected with outputs 98 and 102 of the signal processing circuit 92.

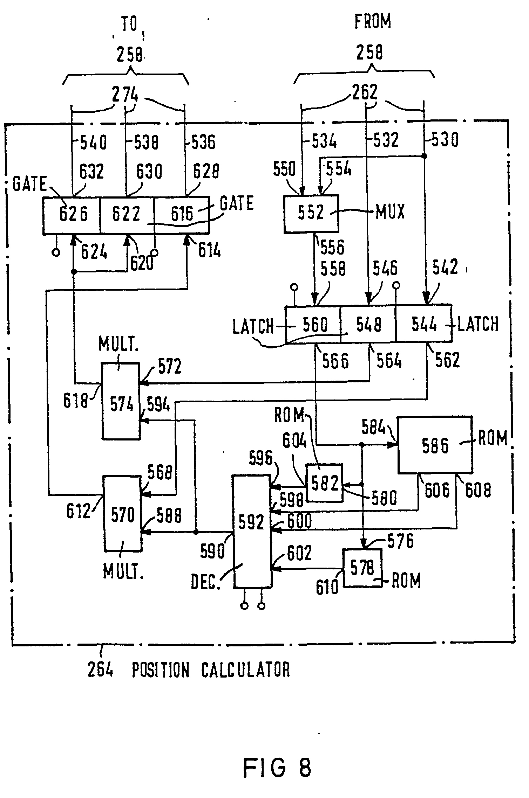

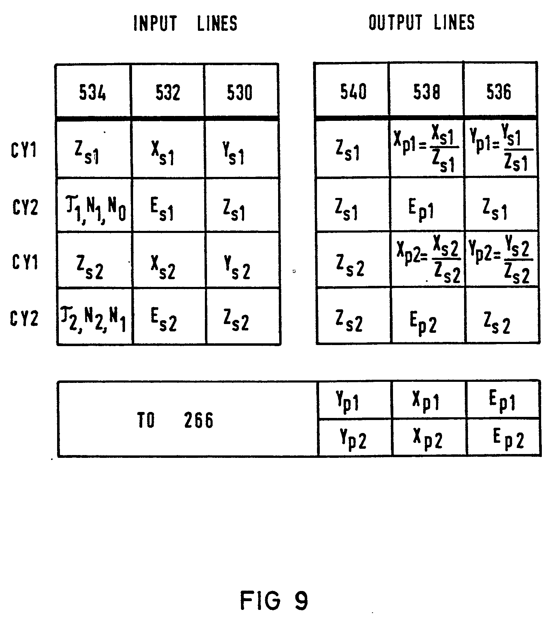

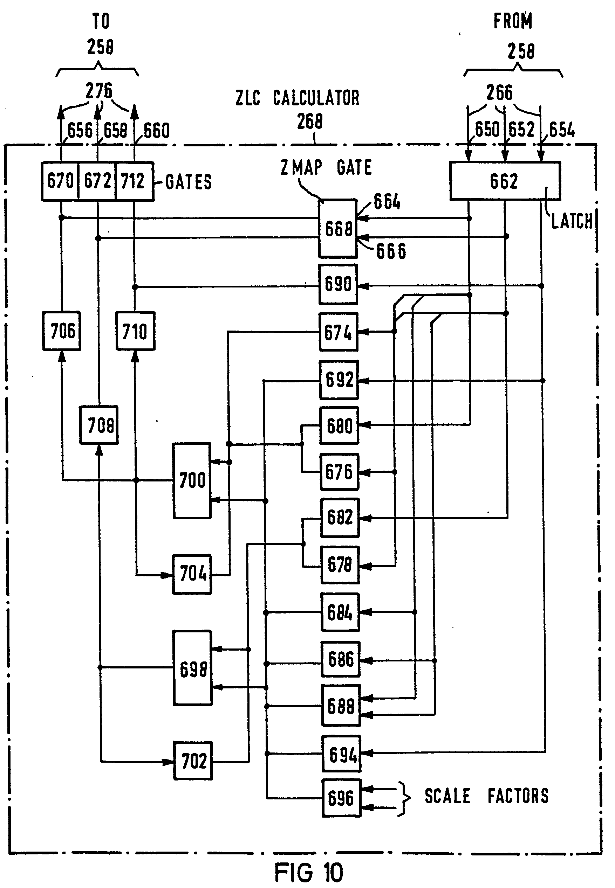

In the signal processing circuit according to Fig. 3 the FIFO 250 takes over output information from integrators 38, 40, 42 and 44 via multiplexer 86 and supplies it to the high speed processor 258 via data bus input 256. The data information leaving the high speed processor 258 at data bus output 260 is first fed to the position calculator 264 for position calculation and event correction (in case of pulse pile-up) as will be later described in more detail in connection with Figs. 8 and 9. The data information at data bus output 274 of the position calculator 264 is refed to the data bus input 256 of the high speed processor 258. The high speed processor 258 now transfers the data information to the ZLC calculator 268 via data bus input 266 for digital energy and position coordinate linearity correction in the manner as described for example for analog processing in US Patent 4,298,944 (Stoub et al.), 4,316,257 (Del Medico et al.) and 4,323,977 (Arseneau). The way the ZLC calculator 268 works will later be illustrated in more detail in connection with Fig. 10.

After data correction in the ZLC calculator 268 the corrected data is again refed from data bus output 276 of the ZLC calculator 268 to the high speed processor 258 via data bus input 256. The high speed processor 258 then supplies the data to FIFO 272 via data bus output 260. From FIFO 272 the data is then fed to outputs 98 and 102 of the signal processing circuit 92 for being transferred to the digital processing and/or display unit 112 via gate 110 and the analog processing and/or display unit 116 via digital-to-analog converter 114.

During each resupply of an E energy signal data the high speed processor 258 checks whether or not the signal data lies within the energy window (stored in digital numbers for energy range) of the energy window memory 280. In case the signal data does not lie within the energy window the data is dumped as invalid. However, in case the signal data lies within the energy window it is further processed as a valid signal data.

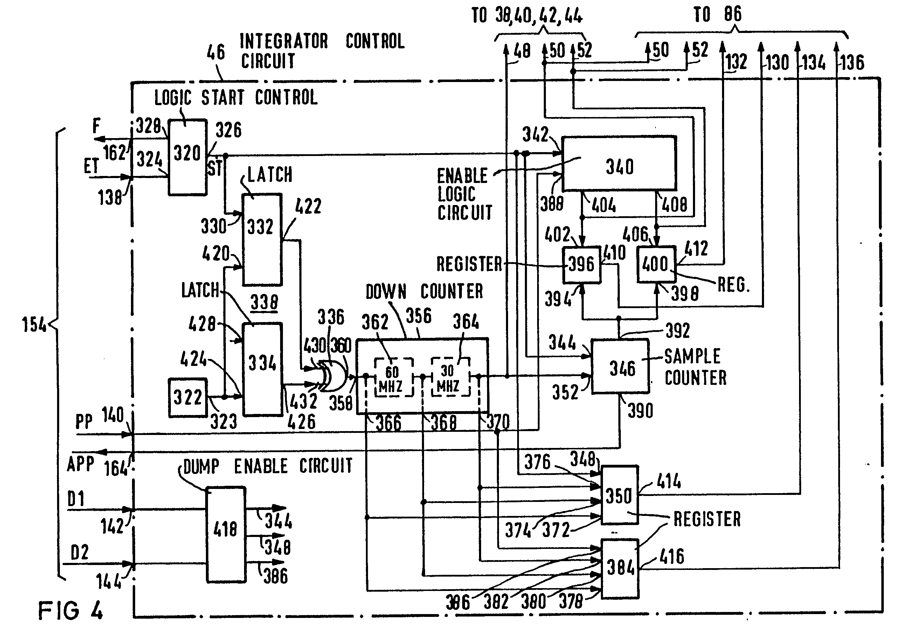

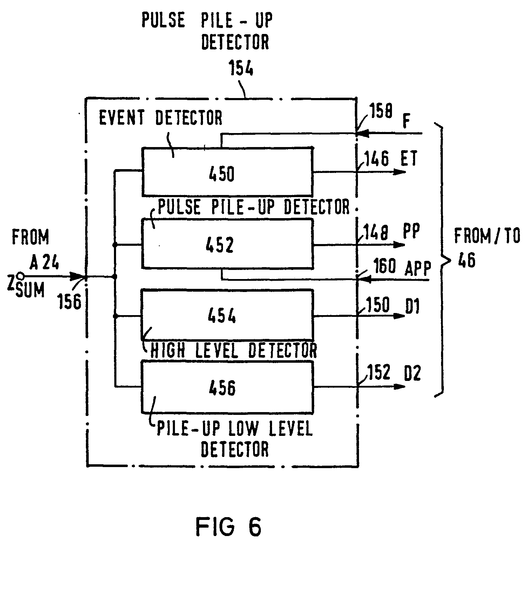

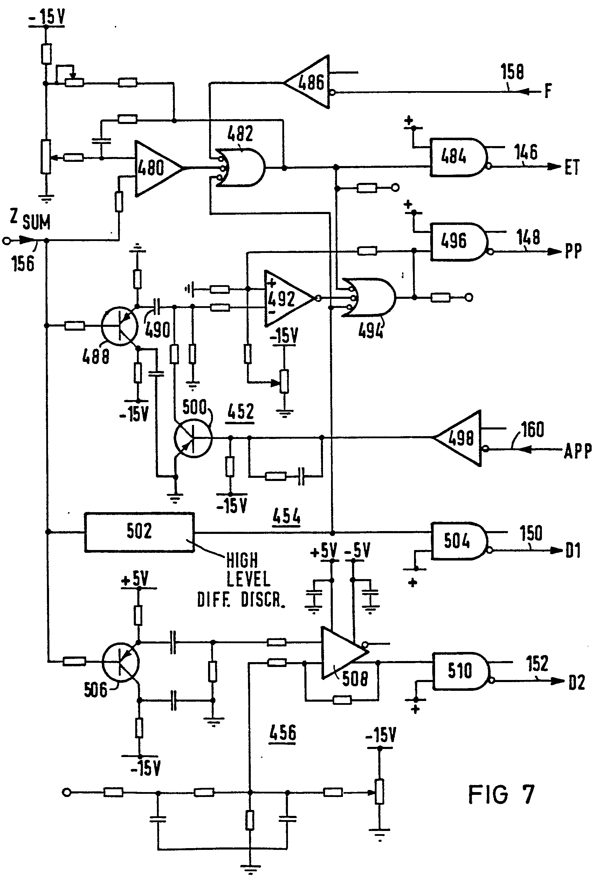

Fig. 4 shows a more detailed diagram of the inner structure of the integrator control circuit 46. According to Fig. 4 the integrator control circuit 46 comprises a logic start control 320 and a 120 MHz oscillator 322. The logic start control 320 has an input 324 which is connected with the input 138 of the integrator control circuit 46. The logic start control 320 also comprises a first output 326 and a second output 328. The second output 328 is connected with the output 162 of the integrator control circuit 46. The input signal at input 138 of the integrator control circuit 46 and thus also at input 324 of the logic start control 320 is an event trigger pulse ET which is generated when an occurring event exceeds a given threshold as will later be described in more detail in connection with Figs. 6 and 7. The signal at second output 328 of the logic start control 320 and therefore the signal at output 162 of the integrator control circuit 46 is a feed back pulse F generated by the logic start control 320 in response to an incoming event trigger pulse ET. The feed back pulse F holds the event trigger as will later be explained in more detail in connection with Figs. 6 and 7.

The logic start control 320 also produces a start pulse ST at its first output 326. This start pulse ST is supplied to the lead input 330 of a first latch 332 which together with a second latch 334 and an exclusive OR gate 336 forms a phase controlled gate 338 for the output signals of the 120 MHz oscillator 322. The start pulse ST of the logic start control 320 is also fed to an enable logic circuit 340 via input 342, to the reset input 344 of a sample counter 346 and to the enable input 348 of a first register 350.

The sample counter 346 comprises a counter input 352 which is connected with the counter output 354 of a down counter 356. The counter input 358 of the down counter 356 is connected with the output 360 of the exclusive OR gate 336.

The down counter 356 is subdivided in a 60 MHz portion 362 and a 30 MHz portion 364. It also comprises a 120 MHz output 366, a 60 MHz output 368 and a 30 MHz output 370. All three outputs 366—370 are connected with corresponding 120 MHz, 60 MHz and 30 MHz inputs 372, 374 and 376 of the first register 350. They are also connected with corresponding 120 MHz, 60 MHz and 30 MHz input 378, 380 and 382 of a second register 384 is connected with input 140 of the integrator control circuit 46. At this input 140 a pulse pile-up detection signal PP appears in a pulse pile-up situation.

The input 140 of the integrator control circuit 46 is also connected with an input 388 of the enable logic circuit 340.

The sample counter 346 comprises a first counter output 390 and a second counter output 392. The first counter output 390 is connected with the output 164 of the integrator control circuit 46. The sample counter 346 generates an activating signal APP for pulse pile-up detection as will later be more described in connection with Figs. 6 and 7. The activating signal APP is supplied from output 164 of the integrator control circuit 46 to the pulse pile-up detector circuit 154.

The second counter output 392 of the sample counter 346 is connected with the input 394 of a first register 396 for the sample count and with the input 398 of a second register 400 for the sample count. The first register 396 for the sample count has an enable input 402 which is connected with the first output 404 of the enable logic circuit 340. Correspondingly, the second registor 400 for the sample count has an enable input 406 which is connected with a second output 408 of the enable logic circuit 340. The first output 404 of the enable logic circuit 340 is also connected with the output bus 50 of the integrator control circuit 46. Correspondingly, the second output 408 of the enable logic circuit 340 is connected with the output bus 52 of the integrator control circuit 46.

Each register 396 and 400 for the sample count has also an output 410, 412, respectively. The output 410 of the first register 396 for the sample count is connected with the output bus 130 of the integrator control circuit 46. The output 412 of the second register 400 for the sample count is connected with the output bus 132 of the integrator control circuit 46.

The 30 MHz output 354 of the down counter 356 is also connected with output bus 48 of the integrator control circuit 46. Furthermore, the first register 350 comprises an output 414 which is connected with output bus 134 of the integrator control circuit 46. Accordingly, the second register 384 has an output 416 which is connected with the output bus 136 of the integrator control circuit 46.

The integrator control circuit 46 also comprises input 142 for a first dumping signal D1 and input 144 for a second dumping signal D2. The dumping signals D1 and D2 are supplied to a dump enable circuit for resetting the sample counter 346 and the first register 350 and the second register 384 in case of the occurrence of an event which has an abnormal high level (dumping signal D1) and in case of the occurrence of a pulse piled-up which has a relatively low level (dumping signal D2).

In Fig. 4 the first latch 332 comprises a signal input 420 and a signal output 422. Accordingly, the second latch 334 comprises a signal input 424 and a signal output 426. It also comprises a lead input 428. The signal inputs 420 of the first latch 332 and the signal input 424 of the second latch 334 are connected with the output 323 of the 120 MHz oscillator 322. The signal output 422 of the first latch 332 is connected with a first input 430 of the exclusive OR gate 336. Accordingly, the signal output 426 of the second latch is connected with a second input 432 of the exclusive OR gate 336.

The operation of the integrator control circuit 46 according to Fig. 4 is as follows:

As mentioned before, each radiation event which exceeds a threshold level (for eliminating noise) generates an event trigger pulse ET. The event trigger pulse ET triggers the logic start control 320 to generate a start pulse ST.

The phase controlled gate 338 works such that the signal at output 422 of the first latch 332 is always opposite to the signal at output 426 of the second latch 334. When a start pulse ST in response to an event trigger pulse ET appears at lead input 330 of the first latch 332 the phase controlled gate 338 becomes conductive for output signals of the 120 MHz oscillator 322 such that the next phase change of the 120 MHz oscillator 322 will cause a positive edge at output 360 of the exclusive OR gate 336 independent on the oscillator pulse polarity. This means the down counter 356 always starts under the same initial conditions at the occurrence of an event trigger pulse ET. The time information of the initial condition is memorized in the first register 350 which has been enabled at enable input 348 by means of the start pulse ST of the logic start control 320.

The 30 MHz output signal at output 354 of the down counter 356 is transferred via output bus 48 of the integrator control circuit 46 to the analog-to-digital converters 200 in the digital integrators 38—44. This causes each analog-to-digital converter 200 to sample the incoming event at a 30 MHz rate which means about 21 samples per event as mentioned before.

The 30 MHz output signals of down counter 356 are also supplied to sample counter 346 via counter input 352. After a certain number of counts, for example 10 counts, the sample counter 346 generates an activating signal APP for pulse pile-up detection at its first counter output 390. The pulse pile-up detector circuit 154 is now enabled for detecting a pulse pile-up situation, if there succeeds any.

The start pulse ST of the logic start control 320 resets the sample counter 346 via reset input 344 always at the occurrence of an event trigger pulse ET. At the same time the start pulse ST triggers the enable logic circuit 340 via input 342 to generate an enabling signal at output 404 or 408. For example, a first start pulse ST at the occurrence of a first event trigger pulse ET triggers the enable logic circuit 340 to produce an enable signal at the first output 404, the second start pulse ST at the occurrence of a second event trigger pulse ET triggers the enable logic circuit 340 to generate an enable signal at second output 408 a third start pulse ST at the occurrence of a third event trigger pulse ET triggers the enable logic circuit 340 to generate an enable signal again at first output 404, etc. According to alternatingly generating enable signals at first and second outputs 404 and 408 the first and second registers 206 and 208 in each digital integrator 38—44 are alternatingly enabled via output buses 50 and 52 and enable inputs 226 and 232, as previously described. Correspondingly, switch 210 in each digital integrator 38 to 44 is alternatingly switched from position I to position II.

The enable signals at outputs 404 and 408 of the enable logic circuit 340 also enable the first and second registers 396, 400 for the sample count via enable inputs 402 and 406 to alternatingly take over count information from sample counter 346 via inputs 394 and 398. For example, for the first event the first register 396, for the second event the second register 400, for a third event again the first register 396 etc., takes over the count information from sample counter 346. The contents of registers 396 and 400 can be read out alternatingly on demand of FIFO 250 in the signal processing circuit 92 via output buses 130 and 132 of the integrator control circuit 46 and multiplexer 86.

The enable logic circuit 340 works on an event to event basis in 700 ns time periods (time which is approximately needed for the integration of one event) as long as there does not occur a pulse pile-up situation.

In case a second event is piled-up on a first event in a pulse pile-up situation succeeding a pulse pile-up detection activating signal APP at output 164 of the integrator control circuit 46, a pulse pile-up detection signal PP is supplied to input 140 of the integrator control circuit 46. The pulse pile-up detection signal PP triggers the enable logic circuit 340 via input 388 to change the enable signal output situation. For example, when at the occurrence of the pulse pile-up detection signal PP an enable signal has been generated at the first output 404 of the enable logic circuit 340 the enable logic circuit 340 now switches from the first output 404 to the second output 408 to generate an enable signal at the second output 408 instead of the first output 404. Accordingly, the first register 206 in each digital integrator 38 to 44 becomes disabled and instead the second register 208 becomes enabled. Also switch 210 in each digital integrator is switched from position I to position II. The digital output signals of the adder 202 are now supplied to the second register 208 and the output signals of the second register 208 are resupplied via switch 210 to the second digital input 214 of adder 202 for integration.

Simultaneously with the enable logic circuit 340 the pulse pile-up detection signal PP also enables the second register 384 via enable input 386 to memorize the output status of down counter 356 at outputs 366, 368 and 370 at the time of the occurrence of the pulse pile-up detection signal APP. In case the event piled-up remains on a low amplitude level a dumping signal D2 is generated at input 144 of integrator control circuit 46 and the sample counter 346 and the second register 384 are reset to dump the piled-up second (invalid) event. The preceding (valid) event, however, continues to be processed in normal manner in the position calculator 264 of the signal processing circuit 92.

Under the circumstances described above, in an unpiled situation the first register 206 of each digital integrator 38, 40, 42 and 44 stores the information $Y_{s1}$, $X_{s1}$, $Z_{s1}$ and $E_{s1}$ of a first event respectively, and the second register 208 memorizes the digital information of $Y_{s2}$, $X_{s2}$, $Z_{s2}$ and $E_{s2}$ of a succeeding unpiled second event, respectively. Correspondingly, the first register 396 contains the sample count of sample counter 346 which belongs to the first event. The second register 400 contains the sample count of sample counter 346 which belongs to the unpiled second event. The first register 350 memorizes the starting times of the first and second events.

In a pulse pile-up situation the second register 384 memorizes the time of the occurrence of a pulse pile-up detection signal PP. Therefore, the output signal at output 416 of the second register 384 includes time information for the exact starting time of a second event piled-up on a first event.

In the pulse pile-up situation the status of registers 206, 208, 396 and 400 has been changed by means of enable logic circuit 340 at the occurrence of the pulse pile-up detection signal PP as described above. The information stored in the first registers 206 of the digital integrators 38, 40, 42 and 44 corresponds with the information $Y_{s1}$, $X_{s1}$, $Z_{s1}$ and $E_{s1}$ of the first event from starting time memorized in the first register 350 until the start time of the succeeding pile-up event. The first register 396 for the sample count of the integrator control circuit 46 contains the number of the last sample of the analog-to-digital converters 200 in each digital integrator 38, 40, 42 and 44 preceding the start time of the succeeding event piled-up. The second registers 208 in the digital integrators 38, 40, 42 and 44 start to memorize the digital information $Y_{s2}$, $X_{s2}$ $Z_{s2}$ and $E_{s2}$ of the second event piled-up together with the cut off tail of the preceding first event. Correspondingly, the second register 400 of the integrator control circuit 46 starts to memorize the number of counts for the event piled-up and the cut off tail of the preceding event beginning with the count of sample counter 346 which succeeds the last count stored in the first register 396 for the sample count.

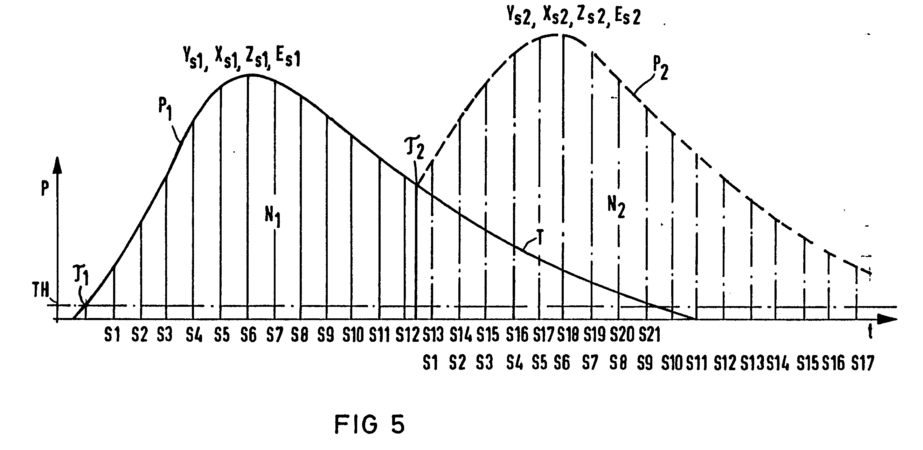

The pulse pile-up situation as previously described is illustrated in more detail in Fig. 5. Fig. 5 shows in a diagram the shape of radiation events P dependent upon time t. A first event $P_1$ is succeeded by a second event $P_2$ which is piled-up. The noise threshold is indicated with TH. An event trigger pulse ET is generated at time $\tau_1$ and a pulse pile-up detection signal PP is generated at time $\tau_2$. The time $\tau_1$ is memorized in the first register 350 of the integrator control circuit 46. The time $\tau_2$ is memorized in the second register 384 of the integrator control circuit 46. As described above, the signals $Y_{s1}$, $X_{s1}$, $Z_{s1}$ and $E_{s1}$ are memorized in the first registers 206 of the digital integrators 38—44. Correspondingly, the signals $Y_{s2}$, $X_{s2}$, $Z_{s2}$ and $E_{s2}$ are going to be memorized in the second registers 208 of the digital integrators 38—44. The count number $N_1$ is memorized in the first register 396 and the count number $N_2$ is going to be memorized in the second register 400 of the integrator control circuit 46.

As indicated in Fig. 5 each event is subdivided in 21 samples S1 to S21. In case of first event $P_1$ the last sample prior to the occurrence of a pulse pile-up detection signal PP at time $\tau_2$ is the sample which is designated with the number S12. This number is stored in the first register 396 for the sample count of the integrator control circuit 46. The thirteenth sample S13 is the first sample of the event $P_2$ piled-up including the tail T of the first event $P_1$.

The $Y_{s1}$, $X_{s1}$ and $Z_{s1}$ signal information of first event $P_1$ with cut off tail T is sufficient for ratio calculation of the coordinate position

$$Y_{p1}=\frac{Y_{s1}}{Z_{s1}} \quad \text{and} \quad X_{p1}=\frac{X_{s1}}{Z_{s1}}$$

of the first event $P_1$ by means of the position calculator 264. However, the information with respect to energy signal $E_{s1}$ is incomplete. Nevertheless, the correct energy signal $E_{p1}$ of event $P_1$ can easily be reconstructed from incomplete $E_{s1}$ in the position calculator 264 by adding previously stored samples S13—S21 of an event $P_0$ preceding event $P_1$. Under these circumstances, cut off tail T is added to $E_{s1}$ of event $P_1$ in the position calculator 264 for calculating the correct energy signal $E_p$.

Event $P_{12}$ which is piled-up can be corrected correspondingly. The samples of tail T which are added to $E_{s1}$ of event $P_1$ are now subtracted from $E_{s2}$ of event $P_2$. The exact time for starting subtraction is given by $\tau_2$.

For each event P the position coordinate signals $X_p$ and $Y_p$ are calculated in a first calculating cycle and the energy signals $E_p$ are calculated in a succeeding second cycle, as will later be explained in more detail in connection with Figs. 8 and 9.

Fig. 6 shows a more detailed circuit diagram of the inner structure of the pulse pile-up detector circuit 154 in Fig. 1B. According to Fig. 6 the pulse pile-up detector circuit 154 comprises an event detector 450, a pulse pile-up detector 452, a high level detector 454 and a pulse pile-up low level detector 456.

A still more detailed circuit diagram of the inner structure of the pulse pile-up detector circuit 154 according to Fig. 6 is illustrated in Fig. 7.

According to Fig. 7 the signal $Z_{sum}$ at input 156 is supplied to a threshold amplifier 480 for events which exceed the noise threshold TH. The output signal of the threshold amplifier 480 generates an event trigger pulse ET via gates 482 and 484. The feedback signal F is refed via amplifier 486 to gate 47. The event trigger pulse ET is held by means of the feedback signal F until the event at the input of the threshold amplifier 480 falls again below the noise threshold TH. The signal $Z_{sum}$ is also supplied to the base of transistor 488, the emitter of which is connected with one electrode of a capacitor 490. The other electrode of the capacitor 490 is connected via amplifier 492 and gates 494 and 496 with output 148 for the pulse pile-up detection signal PP. The capacitor 490 is biased by the activating signal APP for pulse pile-up detection via amplifier 498 and transistor 500. In a pulse pile-up situation an event piled-up on a preceding event is detected by a potential change occurring in capacitor 490 in case the activating signal APP has already been applied to capacitor 490. The immediate result of the potential change in capacitor 490 is the pulse pile-up detection signal PP at output 148.

The signal $Z_{sum}$ is also supplied to a high level differential discriminator 502 which has a similar structure as the one described in columns 12 and 13 of US Patent 3,984,689. The high level differential discriminator 502 together with gate 504 forms the high level detector for high level events which have to be dumped.

Finally, the signal $Z_{sum}$ is also supplied to the base of transistor 506 which together with a threshold amplifier 508 and gate 510 forms the pulse pile-up low level detector 456.

Referring now to Fig. 8, this figure shows a more detailed circuit diagram of the position calculator 264 in Fig. 3. The input lines 530, 532 and 534 form together the data bus input 262 of the position calculator 264. Correspondingly the output lines 536, 538 and 540 form the data bus output 274 of the position calculator 264.

The input line 530 is connected with the input 542 of a first latch 544. The input line 532 is connected with the input 546 of a second latch 548. The input line 534 is connected with a first input 550 of a multiplexer 552 which has a second input 554 which is connected with the input line 530. The output 556 of the multiplexer is connected with the input 558 of a third latch 560.

The first, second and third latches 544, 548 and 560 have each an output 562, 564 and 566, respectively. Output 562 of the first latch 544 is connected with the first input 568 of a first multiplier 570. The output 564 of the second latch 548 is connected with a first input 572 of a second multiplier 574. The output 566 of the third latch 560 is connected with the input 576 of a first ROM 578, with the input 580 of a gate 582 and with the input 584 of a second ROM 586.

The first multiplier 570 comprises a second input 588 which is connected with the output 590 of a decoder 592. Also the second multiplier 574 comprises a second input 594 which is connected with the output 590 of the decoder 592.

The decoder 592 comprises a first, second, third and fourth inputs 596, 598, 600 and 602. The first input 596 is connected with the output 604 of gate 582. The second input 598 is connected with a first output 606 of the second ROM 586. The third input 600 of the decoder 592 is connected with a second output 608 of the second ROM 586. The fourth input 602 is finally connected with the output 610 of the first ROM 578.

The output 612 of the first multiplier 570 is connected with the input 614 of a first output gate 616. Correspondingly, the output 618 of the second multiplier 574 is connected with the input 620 of a second output gate 622 and with the input 624 of a third output gate 626. The first output gate 616 comprises an output 628 which is connected with output line 536 of the position calculator 264. Correspondingly, the second output gate 622 comprises an output 630 which is connected with output line 538 and the third gate 626 comprises an output 632 which is connected with output line 540 of the position calculator 264.

The operation of the position calculator 264 according to Fig. 8 is in light of the diagram of Fig. 9 as follows:

In a first cycle CY1 for processing of the first event $P_1$ $Z_{s1}$ is supplied to input line 534, $X_{s1}$ is supplied to input line 532 and $Y_{s1}$ is supplied to input line 530 of position calculator 264. The signal $Z_{s1}$ is transferred through multiplexer 552 and third latch 560 to gate 582 via input 580 and first ROM 578 via input 576. The signal $Z_{s1}$ passes gate 582 to decoder 592 and is then supplied from output 590 of decoder 592 via multiplier 574 and third gate 626 to output line 540 of the position calculator 264. In the first ROM 578 the inverse signal

$$\frac{1}{Z_{s1}}$$

is formed from the signal $Z_{s1}$. The inverse signal

$$\frac{1}{Z_{s1}}$$

is delivered via decoder 592 to second input 588 of the first multiplier 570 and to the second input 594 of the second multiplier 574.

The signal $Y_{s1}$ on input line 530 is transferred via first latch 544 to the first input 568 of the first multiplier 570. Correspondingly, the signal $X_{s1}$ on input line 532 is supplied via second latch 548 to the second input 572 of the second multiplier 574.

The first multiplier 570 multiplies the signal $Y_{s1}$ with the inverse signal

$$\frac{1}{Z_{s1}}$$

of first ROM 578. Correspondingly, the second multiplier 574 multiplies the signal $X_{s1}$ with the inverse signal

$$\frac{1}{Z_{s1}}.$$

The output signal

$$Y_{p1} = \frac{Y_{s1}}{Z_{s1}}$$

of the first multiplier 570 is delivered via first gate 616 to output line 536 of the position calculator 264. Correspondingly, the output signal

$$X_{p1} = \frac{X_{s1}}{Z_{s1}}$$

of the second multiplier 574 is supplied via second gate 622 to output line 538 of the position calculator 264.

In a second processing cycle CY2 for the first event $P_1$ the signals $\tau_1$, $N_1$ and $N_0$ are supplied via input line 534, multiplexer 552 and third latch 560 to the first ROM 586 via input 584. The second ROM 586 comprises a look-up table for correction counts in case of a pile-up situation. In the present case there exists a pile-up situation, since second event $P_2$ is piled-up on the first event $P_1$. Under these circumstances, starting from 2 counts have to be added to the signal $E_{s1}$ on input line 532 of the position calculator 264. For this purpose, the second ROM 586 generates a tail correction signal at first output 606 which is delivered via decoder 592 to the second input 594 of the second multiplier 574. The signal $E_{s1}$ which is supplied via second latch 548 to the first input 572 of the second multiplier 574 is multiplied by the tail correction signal and the corrected signal $E_{p1}$ is furnished from the second multiplier 574 via second output gate 622 to output line 538 of the position calculator 264.

The signal $Z_{s1}$ on input line 530 is delivered via first latch 544, first multiplier 570 and first output gate 616 to output line 536 of the position calculator 264.

For the piled-up second event $P_2$, which starts at time $\tau_2$, the position coordinate signals

$$X_{p2}=\frac{X_{s2}}{Z_{s2}} \quad \text{and} \quad Y_{p2}=\frac{X_{s2}}{Z_{s2}}$$

are calculated again in a first cycle CY1 in the same manner as described above for $X_{p1}$ and $Y_{p1}$ of event $P_1$. However, the signal $E_{s2}$ has now to be corrected by subtracting the additional counts which have been added to $E_{s1}$ of the event $P_1$ in cycle CY2 of this event. For this purpose, dependent on the signals $\tau_2$, $N_2$, $N_1$ delivered to the second ROM 586 via multiplexer 552 and third latch 560, the second ROM 586 at its second output 608 generates a correction signal for the signal $E_{s2}$ for tail subtraction. This correction signal is supplied via decoder 592 to second multiplier 574. The second multiplier 574 multiplies the signal $E_{s2}$ which is delivered via input line 532 and second latch 548 to second multiplier 574 with the correction signal of the second ROM 586. The corrected output signal $E_{p2}$ of the second multiplier 574 is supplied via second gate 622 to output line 538 of position calculator 264. The signal $Z_{s2}$ on input line 530 is again delivered via first latch 544, first multiplier 570 and first gate 616 to output line 536 of the position calculator 264.

All output signals on output lines 536, 538 and 540 are refed from data bus output 274 of the position calculator 264 to the data bus input 256 of the high speed processor 258. The high speed processor 258 then feeds signals $Y_{p2}$, $X_{p1}$ and $E_{p1}$ for the first event $P_1$ and signals $Y_{p2}$, $X_{p2}$ and $E_{p2}$ for the piled-up second event $P_2$ via data bus output 260 and data bus input 266 to the ZLC calculator 268 for correction of nonlinearities of the Z-signal.

A more detailed circuit diagram of the ZLC calculator 268 is illustrated in Fig. 10.

According to Fig. 10 the input lines 650, 652 and 654 form together the data bus input 266 of the ZLC calculator 268. Accordingly, the output lines 656, 658 and 660 form the data bus output 276 of the ZLC calculator 268. The first input line 250 is fed with the signal $Y_p$, the second input line 652 is fed by the signal $X_p$ and the third input line 654 is fed with the signal $E_p$.

After passing an input latch 662 the signals $Y_p$ and $X_p$ are delivered to the inputs 664 and 666 of a Z map gate 668. The Z map gate 668 allows for a transfer of the signals $Y_p$ and $X_p$ to output lines 656 and 658 of the ZLC calculator 268 via a first output gate 670 and a second output gate 672.

The signals $Y_p$ and $X_p$ are also supplied to a Z map ROM 674, LCY ROMs 676, LCX ROMs 678, a LCY gate 680, a LCX gate 682, a LCLY gate 684, a LCLX gate 686 and a LXLY multiplier 688, respectively.

The signal $E_p$ on line 654 is supplied via latch 662 to a LC gate 690, a Z map gate 692 and a LCf(E) ROM 694.

A LC gate for scale factors is generally designated with 696. All elements 690 to 696 are connected with output lines 656, 658 and 660 of the ZLC calculator 268 by means of a first multiplier 698, a second multiplier 700, a first and second LC latches 702 and 704, a first and second LC gates 706 and 708, a Z map gate 710 and the first, second and a third gates 670, 672 and 712 in the manner as illustrated in Fig. 10.

The LC gate 690 allows $E_p$ to pass during linearity correction. The Z map ROM 674 contains the energy correction coefficients. The Z map gate 692 allows $E_p$ to transfer for energy correction. The LCY gate 680 correspondingly allows $Y_p$ to transfer for $Y_p$ linearity correction. The coefficients for $Y_p$ correction are stored in the LCY ROMs 676. The LCX gate 682 transfers the $X_p$ signal for linearity correction. The coefficients for the $X_p$ correction are stored in the LCX ROMs 678.

The LCLY gate 684 and the LCLX gate 686 transfer the signals $Y_p$ and $X_p$ for correction with interpolation factors. The LXLY multiplier 688 finally generates the cross product LXLY for the interpolation factors.

All corrections are digitally executed according to the same algorithms as described in US Patents 4,298,944 (Stoub et al.), 4,316,257 (Del Medico et al.) and 4,323,977 (Arseneau) for the correction of analog signals.

The energy $E_p$ is corrected in a first cycle by means of second multiplier 700. In case the corrected signal $E_{pc}$ is valid (energy window checking) the position coordinate signals $Y_p$ and $X_p$ are corrected in a second cycle by means of second multiplier 700 and first multiplier 698, respectively. All corrected signals $Y_{pc}$, $X_{pc}$, $E_{pc}$ are refed from data bus output 276 of the ZLC calculator 268 to high speed processor 258 via data bus input 256. The high speed processor 258 then reads out the corrected signals $Y_{pc}$, $X_{pc}$, $E_{pc}$ via FIFO 272 for further processing and/or display.

Fig. 11 finally illustrates a more detailed circuit diagram of the inner structure of the dynamic threshold generator in Fig. 1A.

**Claims**

1. A method for processing pulses in pulse pile-up situations, comprising the steps of detecting of a pulse pile-up situation and of sampling each pulse, characterized in that it further comprises the steps of:

a) sampling (200) each pulse with a second frequency which is a subfrequency of a first frequency;

b) measuring (350), in synchronism with said first and second frequencies, the start time ($\tau 1$) of sampling;

c) counting (346) the number of samples after start time ($\tau 1$) of sampling;

d) measuring (384), in synchronism with said first and second frequencies, the start time ($\tau 2$) of a pulse (P2) piled-up on a preceding pulse (P1) in a detected pulse pile-up situation;

e) storing (396) the number of samples counted until start time ($\tau 2$) of said pulse (P2) piled-up on said preceding pulse (P1);

f) correcting said preceding pulse (P1) by adding corresponding tail samples reconstructed from previously stored samples of another preceding pulse (P0) to the samples of the preceding pulse (P1) after the start time (τ2).

g) correcting said pulse (P2) which is piled up by subtracting from said pulse (P2) the tail samples added to the preceding pulse (P1).

2. The method according to claim 1, further comprising the steps of generating (362, 368) a third frequency as a subfrequency of the first frequency and measuring the start time (τ1) of sampling and the start time (τ2) of the pulse (P2) piled-up on the preceding pulse (P1) in synchronism with the first, second and third frequencies.

3. The method according to claim 2, wherein the third frequency lies between the first and second frequencies.

4. The method according to claim 1, further comprising the steps of:

a) generating (320) a start pulse (ST) at the occurrence of the pulse (P1) to be processed;

b) generating (338) at the occurrence of the start pulse (ST) a first pulse series having a first pulse repetition frequency;

c) generating (364) from the first pulse series a second pulse series having a second pulse repetition frequency which is a subfrequency of the first pulse repetition frequency; and

d) sampling (48, 200) the pulse (P1) with the second pulse repetition frequency.

5. The method according to claim 4, wherein the start time (τ1) of sampling is measured (350) by measuring the status of the first and second pulse series at the occurrance of the start pulse (ST), and the start time (τ2) of a pulse (P2) piled-up on the preceding pulse (P1) is measured (384) by measuring the status of the first and second pulse series at the occurrence of said pulse (P2) which is piled-up.

6. The method according to claim 5, further comprising the step of generating (452) a pile-up detection signal at the detection of a pulse pile-up situation and measuring (384) the start time (τ2) of said pulse (P2) which is piled-up by measuring the status of the first and second pulse series at the occurrence of the pile-up detection signal.

7. The method according to claim 4, further comprising the steps of generating from the first pulse series a third pulse series having a third pulse repetition frequency which is a subfrequency of the first pulse repetition frequency and measuring (350) the start time (τ1) of sampling by measuring the status of the first, second and third pulse series at the occurrence of the start pulse (ST) and the start time (τ2) of said pulse (P2) which is piled-up by measuring (384) the status of the first, second and third pulse series at the occurrence of said pulse (P2) which is piled-up.

8. The method according to claim 7, wherein the third pulse repetition frequency lies between the first and second pulse repetition frequencies.

9. A circuit for processing pulses in pulse pile-up situations including means for detecting of a pulse pile-up situation and means for sampling each pulse, characterized in that it further includes:

a) means (200) for sampling each pulse with a second frequency which is a subfrequency of a first frequency;

b) means (350) for measuring, in synchronism with the first and second frequencies, the start time (τ1) of sampling;

c) means (346) for counting the number of samples after start time (τ1) of sampling;

d) means (384) for measuring, in synchronism with the first and second frequencies, the start time (τ2) of a pulse (P2) piled-up on a preceding pulse (P1) in a detected pulse pile-up situation;

e) means (396) for storing the number of samples counted until start time (τ2) of said pulse (P2) piled-up on said preceding pulse (P1);

f) means for correcting said preceding pulse (P1) by adding corresponding tail samples reconstructed from previously stored samples of another preceding pulse (P0) to the samples of the preceding pulse (P1) after the start time (τ2).

g) means for correcting said pulse (P2) which is piled up by subtracting from said pulse (P2) the tail samples added to the preceding pulse.

10. The circuit according to claim 9, further comprising means (368) for generating a third frequency as a subfrequency of the first frequency and means (350, 384) for measuring, in synchronism with the first, second and third frequencies, the start time (τ1) of sampling and the start time (τ2) of the pulse (P2) which is piled-up.

11. The circuit according to claim 10, wherein said means (368) for generating a third frequency is designated for generating said third frequency such as to lay between the first and second frequencies.

12. The circuit according to claim 9, further comprising:

a) means (320) for generating a start pulse (ST) at the occurrence of the pulse (P1) to be processed;

b) means (338) for generating at the occurrence of the start pulse a first pulse series having a first pulse repetition frequency;

c) means (356) for generating from the first pulse series a second pulse series having a second pulse repetition frequency which is a subfrequency of the first pulse repetition frequency; and

d) means (200) for sampling the pulse (P1) with the second pulse repetition frequency.

13. The circuit according to claim 12, comprising means (350) for measuring the start time (τ1) of sampling by measuring the status of the first and second pulse series at the occurrence of the start pulse (ST), and the start time (τ2) of the pulse (P2) piled-up on the preceding pulse (P1) by measuring the status of the first and second pulse series at the occurrence of said pulse (P2) which is piled-up.

14. The circuit according to claim 12, further comprising means (452) for generating a pile-up detection signal at the occurrence of the pulse (P2) which is piled-up and means for measuring the start time (τ2) of the pulse (P2) which is piled-up by measuring the status of the first and second pulse series at the occurrence of the pile-up detection signal.

15. The circuit according to claim 14, further comprising means (368) for generating from the first pulse series a third pulse series having a third pulse repetition frequency which is a subfrequency of the first pulse repetition frequency and means (350) for measuring the start time (τ1) of sampling by measuring the status of the first, second and third pulse series at the occurrence of the start pulse (ST) and the start time (τ2) of the pulse (P2) which is piled-up by measuring the status of the first, second and third pulse series at the occurrence of the pulse (P2) which is piled-up.

16. The circuit according to claim 15, wherein means are designated for generating the third repetition frequency which lies between the first and second pulse repetition frequencies.

17. The circuit according to claim 9, wherein the means for sampling each pulse comprises:
a) an oscillator (322) for generating the first frequency;
b) a down counter (356) connected with the oscillator for generating the second frequency by down counting the first frequency of the oscillator; and
c) an analog-to-digital converter (200) connected with the down counter for digitalizing the pulse according to the second frequency as sample frequency.

18. The circuit according to claim 17, wherein the analog-to-digital converter (200) is part of an integrator circuit for digitally integrating signals, which comprises:
a) a digital adder (202) having a first digital input (212) for the digital output signals of the analog-to-digital converter and a second digital input (214) and a digital output (216);
b) a digital storage means (204) having a digital input connected with the digital output of the adder and having a digital output (228, 234) connected with the second digital input of the adder; and
c) an integrator control means (46) for controlling the storage means such that each digital signal fed from the digital output of the adder to the storage means is resupplied from the digital output of the storage means to the second digital input of the adder for being added to a succeeding digital signal appearing at the first digital input of the adder.

19. The circuit according to claim 9, wherein the means for measuring the start time (τ1) of sampling and the start time (τ2) of the pulse (P2) which is piled-up, further comprises:
a) an oscillator (322) generating a first pulse series having a first pulse repetition frequency;
b) a down counter (356) connected with the oscillator for generating from the first pulse series a second pulse series having a second pulse repetition frequency which is a subcount of the first pulse repetition frequency;

c) a first register (350) connected with the down counter for memorizing the status of the first and second pulse series at the start time (τ1) of sampling; and
d) a second register (384) connected with the down counter for memorizing the status of the first and second pulse series at the start time (τ2) of the pulse (P2) which is piled-up on the preceding pulse (P1).

20. The circuit according to claim 19, wherein the down counter (356) is also designed for generating a third pulse series having a third pulse repetition frequency by down counting the first pulse repetition frequency of the oscillator, which third pulse repetition frequency lies between the first and second pulse repetition frequencies, and wherein the first register (350) is connected with the down counter for memorizing the status of the first, second and third pulse series at the start time (τ1) of sampling and the second register (384) is connected with the down counter for memorizing the status of the first, second and third pulses at the start time (τ2) of the pulse (P2) which is piled-up.

21. The circuit according to claim 20, wherein the oscillator (322) is a 120 MHz oscillator and the down counter (356) is a combined 60 MHz and 30 MHz down counter, wherein 60 MHz is the third and 30 MHz is the second pulse repetition frequency.

22. The circuit according to claim 19, further comprising:
a) a logic start control (320) for generating a start pulse (ST), at the start time (τ1) of sampling; and
b) a gate (338) connected between the oscillator and the down counter and having a start pulse input being designated for switching the first pulse series of the oscillator to the down counter at the occurrence of a start pulse.

23. The circuit according to claim 22, wherein the gate is a phase controlled gate, comprising:
a) a first latch (332) having a lead input, a signal input and an output;
b) a second latch (334) having a lead input, a signal input and an output; and
c) an exclusive OR gate (336) having first and second inputs and an output;
wherein the lead input of the first latch is connected with an output for the start pulse of the logic start control, the signal inputs of the first and second latches are connected with an output of the oscillator for the first pulse series, the output of the first latch is connected with the first input of the exclusive OR gate, the output of the second latch is connected with the second input of the exclusive OR gate and the output of the exclusive OR gate is connected with an input of the down counter for the first pulse series of the oscillator.

24. The circuit according to claim 19, further comprising a logic start control circuit (320) for generating a start pulse (ST) at the start time (τ1) of sampling, wherein the first register (350) comprises an enable input for the start pulse such that the status of the first, second and third pulse series are memorized at the occurrence of the start pulse.

25. The circuit according to claim 19, further comprising a means (452) for generating a pulse pile-up detection signal at the occurrence of the pulse (P2) which is piled-up, wherein the second register (384) comprises an enable input for the pile-up detection signal such that the status of the first, second and third pulse series are memorized at the occurrence of the pile-up detection signal.

26. The circuit according to claim 9, wherein the means for storing the samples comprises:
a) a sample counter (346) connected with the means for sampling each pulse; and
b) a storage means (396) connected with the sample counter for storing the sample count.

27. The circuit according to claim 26, wherein the storage means comprises first (396) and second registers (400) for alternatingly storing the sample counts of the sample counter.

28. The circuit according to claim 27, further comprising:
a) a logic start control (320) for generating a start pulse (ST) at the start time (τ1) of sampling;
b) a means (452) for generating a pile-up detection signal at the occurrence of the pulse (P2) which is piled-up; and
c) an enable logic circuit (340) having a first enable signal output connected with an enable input of the first register and a second enable signal output connected with an enable signal input of the second register;
wherein the enable logic circuit is designated for generating alternatingly enable signals at the first and second enable outputs according to the occurrence of start pulses and pile-up detection signals.

29. The circuit according to claim 9, wherein the means for correcting each pulse (P1) to be processed preceding the pulse (P2) which is piled-up and the means for correcting each pulse (P2) which is piled-up comprises:
a) a storage means (586) including a look-up table for correction signals according to remaining tail samples and having an input and an output; and
b) a multiplier means (570, 574) having a first input (588, 594) connected with the output of the storage means (586) and a second input (568, 572) for each pulse to be corrected for multiplying the pulses with the correction signals;
wherein the input of the storage means is designated for receiving the start time (τ1) of sampling, the start time (τ2) of the pulse (P2) which is piled-up, the stored number of samples of the pulse until the last sample prior to the occurrence of the pulse (P2) which is piled-up, the stored number of samples of a previously sampled pulse and the number of samples of the pulse which is piled-up, and the look-up table is designated for delivering said correction signals.

30. The circuit according to claim 29, wherein the means for storing samples comprises:
a) a sample counter (346) connected with the means for sampling each pulse; and

b) a storage means (350) connected with the sample counter for storing the sample count and having an output;
wherein the output of the sample count storing means is connected with the input of storage means for correction signals.

31. The circuit according to claim 29, wherein the means for measuring the start time (τ1) of sampling and the start time (τ2) of the pulse (P2) which is piled-up further comprises:
a) an oscillator (322) generating a first pulse series having a first pulse repetition frequency;
b) a down counter (356) connected with the oscillator generating from the first pulse series a second and third pulse series having second and third pulse repetition frequencies which are sub-counts of the first pulse repetition frequency;
c) a first register (350) being connected with the down counter for memorizing the status of the first, second and third pulse series at the start time (τ1) of sampling and having an output; and
d) a second register (384) being connected with the down counter for memorizing the status of the first, second and third pulse series at the start time (τ2) of the pulse (P2) which is piled-up and having an output;
wherein the outputs of the first and second registers are connected with the input of the storage means for the correction signals.

32. A radiation detector for radiation events comprising:
a) a scintillation crystal generating scintillation events according to radiation events impinging on the scintillation crystal;
b) means (10) connected with the scintillation crystal for converting the scintillation events to corresponding analog electrical pulses; and
c) a circuit for detecting and processing the pulses in pulse pile-up situations, which contains means for sampling each pulse,
characterized in that the circuit for detecting and processing comprises:
c1) means (200) for sampling each pulse with a second frequency which is a subfrequency of a first frequency;
c2) means (350) for measuring, in synchronism with the first and second frequencies, said start time (τ1) of sampling;
c3) means (346) for counting the number of samples after start time (τ1) of sampling;
c4) means (396) for storing said number of samples;
c5) means (384) for measuring, in synchronism with the first and second frequencies, the start time (τ2) of a pulse (P2) piled-up on a preceding pulse (P1) in a detected pulse piled-up situation;
c6) means for correcting said preceding pulse (P1) by adding corresponding tail samples reconstructed from previously stored samples of another preceding pulse (P0) to the samples of the preceding pulse (P1) after the start time (τ2).
c7) means for correcting said pulse (P2) which is piled up by subtracting from said pulse (P2) the tail samples added to the preceding pulse.

33. A radiation detector according to claim 32, comprising a scintillation gamma camera wherein the means for converting (10) the scintillation events to corresponding analog electrical signals contains means for generating first (24) and second position (26) coordinate signals and at least a total energy signal (22), wherein the means for correcting each pulse (P1) preceding the pulse (P2) which is piled-up and the means for correcting the pulse (P2) which is piled-up are correcting the total energy signal.

## Patentansprüche

1. Verfahren zum Verarbeiten von Impulsen in Impuls-Überlagerungssituationen, wobei die Impuls-Überlagerungssituation detektiert wird und jeder Impuls abgetastet wird, gekennzeichnet durch folgende zusätzliche Verfahrensschritte:

a) Jeder Impuls wird mit einer zweiten Frequenz, die eine Unterfrequenz einer ersten Frequenz ist, abgetastet (200);

b) synchron zur ersten und zweiten (Frequenz wird die Startzeit (τ1) der Abtastung gemessen (350);

c) die Anzahl der Abtastungen nach der Startzeit (τ1) der Abtastung wird gezählt (346);

d) synchron zur ersten und zweiten Frequenz wird die Startzeit (τ2) eines Impulses (P2), der einem vorhergehenden Impuls (P1) in einer detektierten Impuls-Überlagerungssituation überlagert ist, gemessen (384);

e) die gezählte Anzahl der Abtastungen bis zur Startzeit (τ2) des Impulses (P2), der dem vorhergehenden Impuls (P1) überlagert ist, wird abgespeichert (386);

f) der vorhergehende Impuls (P1) wird korrigiert, indem die entsprechenden Impuls-Schwanz-Abtastungen, die von vorher gespeicherten Abtastungen eines weiteren vorhergehenden Impulses (P0) gespeichert sind, zu den Abtastungen des vorhergehenden Impulses (P1) nach der Startzeit (τ2) addiert werden;

g) der überlagerte Impuls (P2) wird korrigiert, indem von diesem Impuls (P2) die zum vorhergehenden Impuls (P1) addierten Impuls-Schwanz-Abtastwerte subtrahiert werden.

2. Verfahren nach Anspruch 1 mit folgendem zusätzlichen Schritt:

Erzeugung einer dritten Frequenz (362, 368) als Unterfrequenz der ersten Frequenz und Messung der Startzeit (τ1) der Abtastung und der Startzeit (τ2) des Impulses (P2), der dem vorhergehenden Impuls (P1) überlagert ist, synchron zu der ersten, zweiten und dritten Frequenz.

3. Verfahren nach Anspruch 2, wobei die dritte Frequenz zwischen der ersten und der zweiten Frequenz liegt.

4. Verfahren nach Anspruch 1 mit folgenden zusätzlichen Schritten:

a) Erzeugung eines Startimpulses (ST) bei Auftreten des zu verarbeitenden Impulses (P1) (320);

b) Erzeugung einer ersten Impulsserie mit einer ersten Impulsrepetitionsfrequenz bei Auftreten eines Startimpulses (ST);

c) Erzeugung (364) einer zweiten Impulsserie aus der ersten Impulsserie, wobei die zweite Impulsserie eine zweite Impulsrepetitionsfrequenz hat, die eine Unterfrequenz der ersten Impulsrepetitionsfrequenz ist;

d) Abtastung (48, 200) des Impulses (P1) mug der zweiten Impulsrepetitionsfrequenz.

5. Verfahren nach Anspruch 4, wobei die Startzeit (τ1) der Abtastung durch Messung des Status der ersten und zweiten Impulsserie bei Auftreten des Startimpulses (ST) gemessen wird (350) und wobei die Startzeit (τ2) eines Impulses (P2), der dem vorhergehenden Impuls (P1) überlagert ist, durch Messung des Status der ersten und zweiten Impulsserie bei Auftreten dieses Impulses (P2), der überlagert ist, gemessen wird.

6. Verfahren nach Anspruch 5 mit folgenden zusätzlichen Merkmalen:

Erzeugung (452) eines Überlagerungs-Detektionssignals bei Detektion einer Impulsüberlagerungs-Situation und Messung (384) der Startzeit (τ2) des überlagerten Impulses (P2) durch Messung des Status der ersten und zweiten Impulsserie bei Auftreten des Überlagerungs-Detektionssignals.

7. Verfahren nach Anspruch 4 mit folgenden zusätzlichen Merkmalen:

Erzeugung einer dritten Impulsserie aus der ersten Impulsserie, wobei die dritte Impulsserie eine dritte Impulsrepetitionsfrequenz hat, die eine Unterfrequenz der ersten Impuls-Repetitionsfrequenz darstellt und Messung (350) der Startzeit (τ1) der Abtastung durch Messung des Status der ersten, zweiten und dritten Impulsserie bei Auftreten des Startimpulses (ST) und der Startzeit (τ2) des überlagerten Impulses (P2) durch Messung (384) des Status der ersten, zweiten und dritten Impulsserie bei Auftreten des überlagerten Impulses (P2).

8. Verfahren nach Anspruch 7, wobei die dritte Impuls-Repetitionsfrequenz zwischen der ersten und der zweiten Impuls-Repetitionsfrequenz liegt.

9. Schaltung zur Verarbeitung von Impulsen in Impuls-Überlagerungssituationen mit Mitteln zur Detektion einer Impuls-Überlagerungssituation und Mitteln zur Abtastung jedes Impulses, dadurch gekennzeichnet, daß die Schaltung ferner beinhaltet:

a) Mittel (200) zur Abtastung jedes Impulses mit einer zweiten Frequenz, die eine Unterfrequenz der ersten Frequenz ist;

b) Mittel (350) zur Messung der Startzeit (τ1) der Abtastung synchron mit der ersten und der zweiten Frequenz;

c) Mittel (346) zur Zählung der Abtastvorgänge nach der Startzeit (τ1) der Abtastung;

d) Mittel (384) zur Messung der Startzeit (τ2) eines Impulses (P2), der einem vorhergehenden Impuls (P1) überlagert ist in einer detektierten Impuls-Überlagerungssituation, synchron zur ersten und zur zweiten Frequenz;

e) Mittel (396) zur Abspeicherung der Abtastvorgänge, die gezählt werden bis zur Startzeit (τ2) des Impulses (P2), der dem vorhergehenden Impuls (P1) überlagert ist;

f) Mittel zur Korrektur des vorhergehenden

14

Impulses (P1) durch Addition von entsprechenden Schwanz-Abtastwerten, die von vorher gespeicherten Abtastwerten eines weiteren vorausgehenden Impulses (P0) rekonstruiert werden zu den Abtastwerten des vorhergehenden Impulses (P1) nach der Startzeit ($\tau$2);

g) Mittel zur Korrektur des überlagerten Impulses (P2) durch Subtraktion der Schwanz-Abtastwerte, die zum vorhergehenden Impuls addiert werden, von dem Impuls (P2).

10. Schaltung nach Anspruch 9, wobei zusätzlich Mittel (368) zur Erzeugung einer dritten Frequenz als Unterfrequenz der ersten Frequenz und Mittel (350, 384) zur Messung der Startzeit ($\tau$1) der Abtastung und der Startzeit ($\tau$2) des überlagerten Impulses (P2) vorgesehen sind, wobei die Messung synchron zur ersten, zweiten und dritten Frequenz erfolgt.

11. Schaltung nach Anspruch 10, wobei die Mittel (368) zur Erzeugung der dritten Frequenz so ausgestaltet sind, daß die dritte Frequenz zwischen der ersten und der zweiten Frequenz liegt.

12. Schaltung nach Anspruch 9 mit folgenden zusätzlichen Mitteln:

a) Mittel (320) zur Erzeugung eine Startimpulses (ST) bei Auftreten des zu verarbeitenden Impulses (P1);

b) Mittel (338) zur Erzeugung einer ersten Impulsserie mit einer ersten Impuls-Repetitionsfrequenz bei Auftreten des Startimpulses;

c) Mittel (356) zur Erzeugung einer zweiten Impulsfolge mit einer zweiten Impuls-Repetitionsfrequenz, die eine Unterfrequenz der ersten Impuls-Repetitionsfrequenz ist, aus der ersten Impulsfolge;

d) Mittel (200) zur Abtastung des Impulses (P1) mit der zweiten Impuls-Repetitionsfrequenz.

13. Schaltung nach Anspruch 12 mit Mitteln (350) zur Messung der Startzeit ($\tau$1) der Abtastung durch Messung des Status der ersten und zweiten Impulsserie bei Auftreten des Startimpulses (ST) und zur Messung der Startzeit ($\tau$2) des dem vorhergehenden Impuls (P1) überlagerten zweiten Impulses (P2) durch Messung des Status der ersten und der zweiten Impulsserie bei Auftreten des überlagerten Impulses (P2).

14. Schaltung nach Anspruch 12 mit Mitteln (452) zur Erzeugung eines Detektionssignals zur Detektion einer Überlagerung bei Auftreten des überlagerten Impulses (P2) und Mitteln zur Messung der Startzeit ($\tau$2) des überlagerten Impulses (P2) durch Messung des Status der ersten und zweiten Impulsserie bei Auftreten des Überlagerungs-Detektionssignals.

15. Schaltung nach Anspruch 14 mit Mitteln (368) zur Erzeugung einer dritten Impulsfolge aus der ersten Impulsfolge, wobei die dritte Impulsfolge eine dritte Impuls-Repetitionsfrequenz aufweist, die ein Unterfrequenz der ersten Impuls-Repetitionsfrequenz ist und mit Mitteln (350) zur Messung der Startzeit ($\tau$1) der Abtastung durch Messung des Status der ersten, zweiten und dritten Impulsserie bei Auftreten des Startimpulses (ST) und zur Messung der

Startzeit ($\tau$2) des überlagerten Impulses durch Messung des Status der ersten, zweiten und dritten Impulsserie bei Auftreten des überlagerten Impulses (P2).

16. Schaltung nach Anspruch 15, wobei die Mittel so ausgestaltet sind, daß sie eine dritte Repetitionsfrequenz erzeugen, die zwischen der ersten und der zweiten Impuls-Repetitionsfrequenz liegt.

17. Schaltung nach Anspruch 9, wobei die Mittel zur Abtastung jedes Impulses enthalten:

a) einen Oszillator (322) zur Erzeugung der ersten Frequenz;

b) einen Rückwärtszähler (356), der mit dem Oszillator zur Erzeugung der zweiten Frequenz verbunden ist durch Herunterzählen der ersten Frequenz des Oszillators; und

c) einen Analog-Digital-Wandler (200), der mit dem Rückwärtszähler verbunden ist zur Digitalisierung des Impulses entsprechend der zweiten Frequenz als Abtastfrequenz.

18. Schaltung nach Anspruch 17, wobei der Analog-Digital-Wandler (200) Teil einer Integratorschaltung zur digitalen Integration von Signalen ist, beinhaltend:

a) einen digitalen Addierer (202) mit einem ersten digitalen Eingang (212) für das digitale Ausgangssignal des Analog-Digital-Wandlers und eine zweiten digitalen Eingang (214) sowie einen digitalen Ausgang (216);

b) einen digitalen Speicher (204) mit einem digitalen Eingang, der mit dem digitalen Ausgang des Addierers verbunden ist und mit einem digitalen Ausgang (228, 234), der mit dem zweiten digitalen Eingang des Addierers verbunden ist; und

c) eine Integrator-Steuereinheit (46) zur Steuerung des Speichers, so daß jedes digitale Signal, das vom digitalen Ausgang des Addierers zum Speicher geführt wird, vom digitalen Ausgang des Speichers zum zweiten digitalen Eingang des Addierers zurückgeführt wird, um zu einem nachfolgenden digitalen Signal addiert zu werden, das am ersten digitalen Eingang des Addierers erscheint.

19. Schaltung nach Anspruch 9, wobei die Mittel zur Messung der Startzeit ($\tau$1) der Abtastung und der Startzeit ($\tau$2) des überlagerten Impulses (P2) ferner enthalten:

a) einen Oszillator (322) zur Erzeugung einer ersten Impulsserie mit einer ersten Impuls-Repetitionsfrequenz;

b) einen Rückwärtszähler (356), der mit dem Oszillator zur Erzeugung einer zweiten Impulsserie aus der ersten Impulsserie verbunden ist, wobei die zweite Impulsserie eine zweite Impuls-Repetitionsfrequenz aufweist, die ein Bruchteil der ersten Impuls-Repetitionsfrequenz ist;

c) ein erstes Register (350), das mit dem Rückwärtszähler verbunden ist zur Abspeicherung des Status der ersten und zweiten Impulsserie bei der Startzeit ($\tau$1) der Abtastung; und

d) ein zweites Register (384), das mit dem Rückwärtswähler verbunden ist zur Abspeicherung des Status der ersten und zweiten Impulsserie bei der Startzeit (τ2) des Impulses (P2), der dem vorhergehenden Impuls (P1) überlagert ist.

20. Schaltungsanordnung nach Anspruch 19, wobei der Rückwärtszähler (356) ebenfalls so ausgeführt ist, daß er eine dritte Impulsserie mit einer dritten Impuls-Repetitionsfrequenz erzeugt durch Herunterzählen der ersten Impuls-Repetitionsfrequenz des Oszillators, wobei die dritte Impuls-Repetitionsfrequenz zwischen der ersten und der zweiten Impuls-Repetitionsfrequenz liegt und wobei das erste Register (350) mit dem Rückwärtszähler verbunden ist zur Abspeicherung des Status der ersten, zweiten und dritten Impulsserie zur Startzeit (τ1) der Abtastung und wobei das zweite Register (384) mit dem Rückwärtszähler zur Abspeicherung des Status der ersten, zweiten und dritten Impulse zur Startzeit (τ2) des überlagerten Impulses (P2) verbunden ist.

21. Schaltung nach Anspruch 20, wobei der Oszillator (322) ein 120 MHz-Oszillator ist und wobei der Rückwärtszähler ein kombinierter 60 MHz- und 30 MHz-Rückwärtszähler ist, wobei 60 MHz die dritte und 30 MHz die zweite Impuls-Repetitionsfrequenz ist.

22. Schaltung nach Anspruch 19 mit folgenden zusätzlichen Merkmalen:

a) einer logischen Startsteuerung (320) zur Erzeugung eines Startimpulses (ST) zur Startzeit (τ1) der Abtastung; und

b) einem Gatter (338), das zwischen dem Oszillator und dem Rückwärtszähler verbunden ist und einen Startimpulseingang aufweist, der vorgesehen ist zur Schaltung der ersten Impulsserie der Oszillators zum Rückwärtszähler bei Auftreten eines Startimpulses.

23. Schaltung nach Anspruch 22, wobei das Gatter ein phasengesteuertes Gatter ist mit folgenden Merkmalen:

a) einem ersten Latch-Register (332) mit einem Steuereingang, einem Signaleingang und einem Ausgang;

b) einem zweiten Latch-Register (334) mit einem Steuereingang, einem Signaleingang und einem Ausgang; und

c) einem Exklusiv-ODER-Gatter (336) mit ersten und zweiten Eingängen und einem Ausgang,

wobei der Steuereingang des ersten Latch-Registers mit dem Ausgang für den Startimpuls der logischen Startsteuereinheit verbunden ist, wobei die Signaleingänge der ersten und zweiten Latch-Register mit einem Ausgang des Oszillators für die erste Impulsserie verbunden sind, wobei der Ausgang des ersten Latch-Registers mit dem ersten Eingang des Exklusiv-ODER-Gatters verbunden ist, wobei der Ausgang des zweiten Latch-Registers mit dem zweiten Eingang des Exklusiv-ODER-Gatters verbunden ist und wobei des Ausgang des Exklusiv-ODER-Gatters mit einem Eingang des Rückwärtszählers für die erste Impulsserie des Oszillators verbunden ist.

24. Schaltung nach Anspruch 19, ferner enthaltend eine logische Startsteuereinheit (320) zur Erzeugung eines Startimpulses (ST) zur Start-

zeit (τ1) der Abtastung, wobei das erste Register (350) einen Freigabeeingang für den Startimpuls enthält, so daß der Status der ersten, zweiten und dritten Impulsreihe bei Auftreten des Startimpulses abgespeichert wird.

25. Schaltung nach Anspruch 19, ferner enthaltend Mittel (452) zur Erzeugung eines Detektionssignals für die Impulsüberlagerung bei Auftreten des überlagerten Impulses (P2), wobei das zweite Register (384) einen Freigabeeingang für das Überlagerungs-Detektionssignal enthält, so daß der Status der ersten, zweiten und dritten Impulsserie bei Auftreten des Detektionssignals für die Überlagerung abgespeichert werden.

26. Schaltung nach Anspruch 9, wobei die Mittel zur Abspeicherung der Abtastwerte enthalten:

a) einen Abtastzähler (346), der mit den Mitteln zur Abtastung jedes Impulses verbunden ist; und

b) Speichermittel (396), die mit dem Abtastzähler zur Abspeicherung der Abtastzahl verbunden sind.

27. Schaltung nach Anspruch 26, wobei die Speichermittel erste (396) und zweite (400) Register enthalten, die alternierend die Abtastzahlen des Abtastzählers abspeichern.

28. Schaltung nach Anspruch 27, ferner enthaltend:

a) eine logische Startsteuerung (320) zur Erzeugung eines Startimpulses (ST) zur Startzeit (τ1) der Abtastung;

b) Mittel (452) zur Erzeugung eines Detektionssignals für die Überlagerung bei Auftreten des überlagerten Impulses (P2); und

c) eine Freigabe-Logik-Schaltung (340) mit einem ersten Freigabesignalausgang, der mit einem Freigabeeingang des ersten Registers verbunden ist und mit einem zweiten Freigabesignalausgang, der mit einem Freigabesignaleingang des zweiten Registers verbunden ist,

wobei die Freigabe-Logik-Schaltung so ausgestaltet ist, daß sie alternierende Freigabesignale am ersten und am zweiten Freigabeausgang erzeugt entsprechend dem Auftreten von Startimpulsen und Überlagerungs-Detektionssignalen.

29. Schaltung nach Anspruch 9, wobei die Mittel zur Korrektur jedes zu bearbeitenden Impulses (P1), der dem überlagerten Impuls (P2) vorausgeht, und die Mittel zur Korrektur jedes überlagerten Impulses (P2) enthalten:

a) Speichermittel (586) mit einer Tabelle für Korrektursignale entsprechend der verbleibenden Schwanz-Abtastwerte und mit einem Eingang und einem Ausgang; und

b) einem Multiplizierer (570, 574) mit einem ersten Eingang (588, 594), der mit dem Ausgang der Speichermittel (586) verbunden ist und mit einem zweiten Eingang (568, 572) für jeden zu korrigierenden Impuls, um die Impulse mit den Korrektursignalen zu multiplizieren,

wobei der Eingang des Speichers ausgeführt ist zum Empfang der Startzeit (τ1) der Abtastung, der Startzeit (τ2) des überlagerten Impulses (P2), der gespeicherten Anzahl von Abtastwerten des Impulses bis zur letzten Abtastung vor dem Auftreten des überlagerten Impulses (P2), der gespeicherten Anzahl von Abtastungen eines vorher abgetasteten Impulses und der Anzahl von Abtastungen des überlagerten Impulses und wobei die Tabelle zur Vorgabe des Korrektursignals vorgesehen ist.

30. Schaltung nach Anspruch 29, wobei die Mittel zur Abspeicherung von Abtastwerten enthalten:

a) einen Abtastwertzähler (346), der mit den Mitteln zur Abtastung jedes Impulses verbunden ist; und

b) einem Speicher (350), der mit dem Abtastwertzähler verbunden ist zur Abspeicherung der Abtastzählwerts, wobei der Speicher (350) einen Ausgang hat,

wobei der Ausgang des Speichers für den Abtastzählwert mit dem Eingang eines Speichers für Korrektursignale verbunden ist.

31. Schaltung nach Anspruch 29, wobei die Mittel zur Messung der Startzeit (τ1) der Abtastung und der Startzeit (τ2) für den überlagerten Impuls (P2) ferner enthalten:

a) einen Oszillator (322) zur Erzeugung einer ersten Impulsserie mit einer ersten Impuls-Repetitionsfrequenz;

b) einen Rückwärtszähler (356), der mit dem Oszillator verbunden ist und aus der ersten Impulsserie eine zweite und dritte Impulsserie mit einer zweiten bzw. dritten Impuls-Repetitionsfrequenz erzeugt, die Bruchteile der ersten Impuls-Repetitionsfrequenz sind;

c) ein erstes Register (350), das mit dem Rückwärtszähler verbunden ist zur Abspeicherung des Status der ersten, zweiten und dritten Impulsserie zur Startzeit (τ1) der Abtastung sowie mit einem Ausgang; und

d) ein zweites Register (384), das mit dem Rückwärtszähler zur Abspeicherung des Status der ersten, zweiten und dritten Impulsserie zur Startzeit (τ2) des überlagerten Impulses (P2) verbunden ist und einen Ausgang aufweist,

wobei die Ausgänge des ersten und zweiten Registers mit dem Eingang des Speichers für Korrektursignale verbunden sind.

32. Strahlungsdetektor für Strahlungsereignisse, enthaltend:

a) einen Szintillationskristall zur Erzeugung von Szintillationsereignissen entsprechend den Strahlungsereignissen, die auf den Szintillationskristall einwirken;

b) mit dem Szintillationskristall verbunden Mittel (10) zur Umwandlung der Szintillationsereignisse in entsprechende analoge elektrische Impulse; und

c) eine Schaltung zur Detektion und Verabeitung von Impulsen in Impuls-Überlagerungssituationen, die Mittel zur Abtastung jedes Impulses enthält,

dadurch gekennzeichnet, daß die Schaltung zur Detektion und Verarbeitung enthält:

c1) Mittel (200) zur Abtastung jedes Impulses mit einer zweiten Frequenz, die eine Unterfrequenz einer ersten Frequenz ist;

c2) Mittel (350) zur Messung der Startzeit (τ1) der Abtastung synchron zur ersten und zweiten Frequenz;

c3) Mittel (346) zum Zählen der Anzahl von Abtastungen nach der Startzeit (τ1) der Abtastung;

c4) Mittel (396) zur Abspeicherung der Anzahl von Abtastungen;

c5) Mittel (384) zur Messung der Startzeit eines einem vorhergehenden Impuls (P1) überlagerten Impulses (P2) in einer detektierten Impuls-Überlagerungssituation, wobei die Messung synchron zur ersten und zweiten Frequenz erfolgt;

c6) Mittel zur Korrektur des vorhergehenden Impulses (P1) durch Addition entsprechender Schwanz-Abtastwerte, die aus vorher abgespeicherten Abtastwerten eines weiteren vorhergehenden Impulses (P0) gewonnen werden, zu den Abtastwerten des vorhergehenden Impulses (P1) nach der Startzeit (τ2);

c7) Mittel zur Korrektur des überlagerten Impulses (P2) durch Subtraktion der zum vorhergehenden Impuls hinzuaddierten Schwanz-Abtastwerte von diesem Impuls (P2).

33. Strahlungsdetektor nach Anspruch 32 mit einer Szintillationskamera, wobei die Mittel (10) zur Umwandlung der Szintillationsereignisse in entsprechende analoge elektrische Signale Mittel zur Erzeugung erster (24) und zweiter (26) Positionskoordinatensignale und wenigstens eines Gesamtenergiesignals (22) enthalten, wobei die Mittel zur Korrektur jedes, dem überlagerten Impuls (P2) vorhergehenden Impulses (P1), und die Mittel zur Korrektur des überlagerten Impulses (P2) das Gesamtenergiesignal korrigieren.

**Revendications**

1. Un procédé pour traiter des impulsions dans des situations d'empilement d'impulsions, comprenant les étapes qui consistent à détecter une situation d'empilement d'impulsions et à échantillonner chaque impulsion, caractérisé en ce qu'il comprend en outre les étapes suivantes:

a) on échantillonne (200) chaque impulsion avec une seconde fréquence qui est on sous-multiple d'une première fréquence;

b) on mesure (350) l'instant initial (τ1) d'échantillonnage, en synchronisme avec les première et seconde fréquences;

c) on compte (346) le nombre d'échantillons après l'instant initial (τ1) d'échantillonnage;

d) on mesure (384), en synchronisme avec les première et seconde fréquences, l'instant initial (τ2) d'une impulsion (P2) qui est empilée sur une impulsion précédente (P1), dans une situation d'empilement d'impulsions détectée;

e) on enregistre (396) le nombre d'échantillons comptés jusqu'à l'instant initial (τ2) de l'impulsion (P2) qui est empilée sur l'impulsion précédentes (P1);

f) on corrige l'impulsion précédente (P1) en ajoutant aux échantillons de l'impulsion précédente (P1), après l'instant initial (τ2), des échantillons de queue correspondants reconstitués à partir d'échantillons enregistrés précédemment d'une autre impulsion précédente (P0);

g) on corrige l'impulsion (P2) qui est empilée, en soustrayant de cette impulsion (P2) les échantillons de queue qui ont été ajoutés à l'impulsion précédente (P1).

2. Le procédé selon la revendication 1, comprenant en outre les étapes qui consistent à générer (362, 368) une troisième fréquence qui est un sous-multiple de la première fréquence, et à mesurer l'instant initial ($\tau 1$) d'échantillonnage et l'instant initial ($\tau 2$) de l'impulsion (P2) qui est empilée sur l'impulsion précédente (P1), en synchronisme avec les première, seconde et troisième fréquences.

3. Le procédé selon la revendication 2, dans lequel la troisième fréquence est comprise entre les première et seconde fréquences.

4. Le procédé selon la revendication 1, comprenant en outre les étapes suivantes:

a) on génère (320) une impulsion de démarrage (ST) à l'apparition de l'impulsion (P1) à traiter;

b) on génère (338), à l'apparition de l'impulsion de démarrage (ST), une première série d'impulsions ayant une première fréquence de répétition d'impulsions;

c) on génère (364) à partir de la première série d'impulsions, une seconde série d'impulsions ayant une seconde fréquence de répétition d'impulsions qui est un sous-multiple de la première fréquence de répétition d'impulsions; et

d) on échantillone (48, 200) l'impulsion (P1) avec la seconde fréquence de répétition d'impulsions.

5. Le procédé selon la revendication 4, dans lequel on mesure (350) l'instant initial ($\tau 1$) d'échantillonnage en mesurant l'état des première et seconde séries d'impulsions à l'apparition de l'impulsion de démarrage (ST), et on mesure (384) l'instant initial ($\tau 2$) d'une impulsion (P2) empilée sur l'impulsion précédente (P1) en mesurant l'état des première et seconde séries d'impulsions à l'apparition de l'impulsion (P2 qui est empilée.

6. Le procédé selon la revendication 5, comprenant en outre l'étape qui consiste à générer (452) un signal de détection d'empilement à la détection d'une situation d'empilement d'impulsions, et à mesurer (384) l'instant initial ($\tau 2$) de l'impulsion (P2) qui est empilée, en mesurant l'état des première et seconde séries d'impulsions à l'apparition du signal de détection d'empilement.

7. Le procédé selon la revendication 4, comprenant en outre les étapes qui consistent à générer à partir de la première série d'impulsions une troisième série d'impulsions ayant une troisième fréquence de répétition d'impulsions qui est un sous-multiple de la première fréquence de répétition d'impulsions, et à mesurer (350) l'instant initial ($\tau 1$) d'échantillonnage en mesurant l'état des première, seconde et troisième séries d'impulsions à l'apparition de l'impulsion de démarrage (ST), et l'instant initial ($\tau 2$) de l'impulsion (P2) qui est empilée en mesurant (384) l'état des première, seconde et troisième séries d'impulsions à l'apparition de l'impulsion (P2) qui est empilée.

8. Le procédé selon la revendication 7, dans lequel la troisième fréquence de répétition d'impulsions est comprise entre les première et seconde fréquences de répétition d'impulsions.

9. Un circuit pour traiter des impulsions dans des situations d'empilement d'impulsions, comprenant des moyens destinés à détecter une situation d'empilement d'impulsions et des moyens destinés à échantillonner chaque impulsions, caractérisé en ce qu'il comprend en outre:

a) des moyens (200) pour échantillonner chaque impulsion avec une seconde fréquence qui est on sous-multiple d'une première fréquence;

b) des moyens (350) pour mesurer l'instant initial ($\tau 1$) d'échantillonnage, en synchronisme avec les première et seconde fréquences;

c) des moyens (346) pour compter le nombre d'échantillons après l'instant initial ($\tau 1$) d'échantillonnage;

d) des moyens (384) pour mesurer, en synchronisme avec les première et seconde fréquences, l'instant initial ($\tau 2$) d'une impulsion (P2) qui est empilée sur une impulsion précédente (P1), dans une situation d'empilement d'impulsions détectée;

e) des moyens (396) pour enregistrer le nombre d'échantillons comptés jusqu'à l'instant initial ($\tau 2$) de l'impulsion (P2) qui est empilée sur l'impulsion précédente (P1);

f) des moyens pour corriger l'impulsion précédente (p1) en ajoutant aux échantillons de l'impulsion précédente (P1), après l'instant initial (P2), des échantillons de queue correspondants reconstitués à partir d'échantillons enregistrés précédemment d'une autre impulsion précédente (P0);

g) des moyens pour corriger l'impulsion (P2) qui est empilée, en soustrayant de cette impulsion (P2) les échantillons de queue qui ont été ajoutés à l'impulsion précédente.

10. Le circuit selon la revendication 9, comprenant en outre des moyens (368) pour générer une troisième fréquence qui est un sous-multiple de la première fréquence, et des moyens (350, 384) pour mesurer, en synchronisme avec les première, seconde et troisième fréquences, l'instant initial ($\tau 1$) d'échantillonnage et l'instant initial ($\tau 2$) de l'impulsion (P2) qui est empilée.

11. Le circuit selon la revendication 10, dan lequel les moyens (368) pour générer une troisième fréquence sont conçus de façon à générer cette troisième fréquence de manière qu'elle soit comprise entre les première et seconde fréquences.

12. Le circuit selon la revendication 9, comprenant en outre:

a) des moyens (320) pour générer une impulsion de démarrage (ST) à l'apparition de l'impulsion (P1) à traiter;

b) des moyens (338) pour générer, à l'apparition de l'impulsions de démarrage, une première série d'impulsions ayant une première fréquence de répétition d'impulsions;

c) des moyens (356) pour générer à partir de la première série d'impulsions, une seconde série d'impulsions ayant une seconde fréquence de répétition d'impulsions qui est un sous-multiple de la première fréquence de répétition d'impulsions; et

d) des moyens (200) pour échantillonner l'impulsion (P1) avec la seconde fréquence de répétition d'impulsions.

13. Le circuit selon la revendication 12, comprenant des moyens (350) pour mesurer l'instant initial ($\tau1$) d'échantillonnage, en mesurant l'état des première et seconde séries d'impulsions à l'apparition de l'impulsion de démarrage (ST), et l'instant initial ($\tau2$) de l'impulsion (P2) empilée sur l'impulsion précédente (P1), en mesurant l'état des première et seconde séries d'impulsions à l'apparition de l'impulsion (P2) qui est empilée.

14. Le circuit selon la revendication 12, comprenant en outre des moyens (452) pour générer un signal de détection d'impilement à l'apparition de l'impulsion (P2) qui est empilée, et des moyens pour mesurer l'instant initial ($\tau2$) de l'impulsion (P2) qui est empilée, en mesurant l'état des première et seconde séries d'impulsions à l'apparition du signal de détection d'empilement.

15. Le circuit selon la revendication 14, comprenant en outre des moyens (368) pour générer à partir de la première série d'impulsions, une troisième série d'impulsions ayant une troisième fréquence de répétition d'impulsions qui est un sous-multiple de la première fréquence de répétition d'impulsions, et des moyens (350) pour mesurer l'instant initial ($\tau1$) d'échantillonnage, en mesurant l'état des première, seconde et troisième séries d'impulsions à l'apparition de l'impulsion de démarrage (ST), et l'instant initial ($\tau2$) de l'impulsion (P2) qui est empilée, en mesurant l'état des première, seconde et troisième séries d'impulsions à l'apparition de l'impulsion (P2) qui est empilée.

16. Le circuit selon la revendication 15, dans lequel des moyens sont conçus pour générer la troisième fréquence de répétition de façon qu'elle soit comprise entre les première et seconde fréquences de répétition d'impulsions.

17. Le circuiit selon la revendication 9, dans lequel les moyens pour échantillonner chaque impulsions comprennent:

a) un oscillateur (322) pour générer la première frequence;

b) un compteur/diviseur de fréquence (356) connecté à l'oscillateur pour générer la seconde fréquence par division de la première fréquence de l'oscillateur; et

c) un convertisseur analogique-numérique (200) connecté au compteur/diviseur de fréquence pour numériser l'impulsion avec la seconde fréquence comme fréquence d'échantillons.

18. Le circuit selon la revendication 17, dans lequel le convertisseur analogique-numérique (200) fait partie d'un circuit intégrateur destiné à intégrer des signaux de façon numérique qui comprend:

a) un additionneur numérique (202) ayant une première entrée numérique (212) pour les signaux de sortie numériques du convertisseur analogique-numérique, et une seconde entrée numérique (214) et une sortie numérique (216);

b) des moyens d'enregistrement numériques (204) ayant une entrée numérique connectée à la sortie numérique de l'additionneur, et ayant une sortie numérique (228, 234) connectée à la seconde entrée numérique de l'additionneur; et

c) des moyens de commande d'intégrateur (46) destinés à commander les moyens d'enregistrement de façon que chaque signal numérique qui est transmis de la sortie numérique de l'additionneur vers les moyens d'enregistrement soit renvoyé de la sortie numérique des moyens d'enregistrement vers la seconde entrée numérique de l'additionneur, pour être additionné à un signal numérique suivant qui apparaît sur la première entrée numérique de l'additionneur.

19. Le circuit selon la revendication 9, dans lequel les moyens destinés à mesurer l'instant initial ($\tau1$) d'échantillonnage et l'instant initial ($\tau2$) de l'impulsion (P2) qui est empilée, comprennent en outre:

a) un oscillateur (322) qui génère une première série d'impulsions ayant une première fréquence de répétition d'impulsions;

b) un compteur/diviseur de fréquence (356) qui est connecté à l'oscillateur pour générer à partir de la première série d'impulsions une seconde série d'impulsions ayant une seconde fréquence de répétition d'impulsions qui est un sous-multiple de la première fréquence de répétition d'impulsions;

c) un premier registre (350) connecté au compteur/diviseur de fréquence pour mémoriser l'état des première et seconde séries d'impulsions à l'instant initial ($\tau2$) d'échantillonage; et

d) un second registre (384) connecté au compteur/diviseur de fréquence pour mémoriser l'état des première et seconde séries d'impulsions à l'instant initial ($\tau2$) de l'impulsion (P2) qui est empilée sur l'impulsion précédente (P1).

20. Le circuit selon la revendication 19, dans lequel le compteur/diviseur de fréquence (356) est également conçu de façon à générer une troisième série d'impulsions ayant une troisième fréquence de répétition d'impulsions, en divisant la première fréquence de répétition d'impulsions de l'oscillateur, cette troisième fréquence de répétition d'impulsions étant comprise entre les première et seconde fréquences de répétition d'impulsions, et dans lequel le premier registre (350) est connecté au compteur/diviseur de fréquence pour mémoriser l'état des première, seconde et troisième séries d'impulsions à l'instant initial ($\tau1$) d'échantillonnage, et le second registre (384) est connecté au compteur/diviseur de fréquence pour mémoriser l'état des première, seconde et troisième séries d'impulsions à l'instant initial ($\tau2$) de l'impulsion (P2) qui est empilée.

21. Le circuit selon la revendication 20, dans lequel l'oscillateur (322) est un oscillateur à 120 MHz et le compteur/diviseur de fréquence (356) est un compteur/diviseur de fréquence combiné à 60 MHz et 30 MHz, dans lequel 60 MHz est la troisième fréquence de répétition d'impulsions et 30 MHz est la seconde fréquence de répétition d'impulsions.

22. Le circuit selon la revendication 19, comprenant en outre:

a) un circuit logique de commande de démarrage (320) destiné à générer une impulsion de démarrage (ST) à l'instant initial (τ1) d'échantillonage; et

b) une porte (338) connectée entre l'oscillateur et le compteur/diviseur de fréquence et ayant une entrée d'impulsion de démarrage qui est prévue pour l'application de la première série d'impulsions de l'oscillateur au compteur/diviseur de fréquence à l'apparition d'une impulsion de démarrage.

23. Le circuit selon la revendication 22, dans lequel la porte est une porte à commande de phase, comprenant:

a) une première bascule (332) ayant une entrée d'avance, une entrée de signal et une sortie;

b) une seconde bascule (334) ayant une entrée d'avance, une entrée de signal et une sortie; et

c) une porte OU-EXCLUSIF (336) ayant des première et seconde entrées et une sortie; et

dans lequel l'entrée d'avance de la première bascule est connectée à une sortie pour l'impulsion de démarrage du circuit logique de commande de démarrage, les entrées de signal des première et seconde bascules sont connectées à une sortie de l'oscillateur pour la première série d'impulsions, la sortie de la première bascule est connectée à la première entrée de la porte OU-EXCLUSIF, la sortie de la seconde bascule est connectée à la seconde entrée de la porte OU-EXCLUSIF et la sortie de la porte OU-EXCLUSIF est connectée à une entrée du compteur/diviseur de fréquence pour la première série d'impulsions de l'oscillateur.

24. Le circuit selon la revendication 19, comprenant en outre un circuit logique de commande de démarrage (320) destiné à produire une impulsion de démarrage (ST) à l'instant initial (τ1) d'échantillonnage, dan lequel le premier registre (350) comprend une entrée de validation pour l'impulsion de démarrage, pour faire en sorte que les états des première, seconde et troisième séries d'impulsions soient mémorisés à l'apparition de l'impulsion de démarrage.

25. Le circuit selon la revendication 19, comprenant en outre des moyens (452) destinés à produire un signal de détection d'empilement d'impulsions à l'apparition de l'impulsion (P2) qui est empilée, dans lequel le second registre (384) comprend une entrée de validation pour le signal de détection d'empilement, pour faire en sorte que les états des première, seconde et troisième séries d'impulsions soient mémorisés à l'apparition du signal de détection d'empilement.

26. Le circuit selon la revendication 9, dans lequel les moyens d'enregistrement des échantillons comprenant:

a) un compteur d'échantillons (346) connecté aux moyens destinées à échantilloner chaque impulsion; et

b) des moyens d'enregistrement (396) qui sont connectés au compteur d'échantillons pour enregistrer le compte d'échantillons.

27. Le circuit selon la revendication 26, dans lequel les moyens d'enregistrement comprennent des premier (396) et second registres (400) pour enregistrer en alternance les comptes d'échantillons du compteur d'échantillons.

28. Le circuit selon la revendication (27) comprenant en outre:

a) un circuit logique de commande de démarrage (320) destiné à produire une impulsion de démarrage (ST) à l'instant initial (τ1) d'échantillonage;

b) des moyens (452) destinés à produire un signal de détection d'empilement à l'apparition de l'impulsion (P2) qui est empilée; et

c) un circuit logique de validation (340) ayant une première sortie de signal de validation connectée à une entrée de validation du premier registre, et une seconde sortie de signal de validation connectée à une entrée de validation du second registre;

dans lequel le circuit logique de validation est conçu de façon à produire en alternance des signaux de validation sur les première et seconde sorties de validation, sous la dépendance de l'apparition d'impulsions de démarrage et de signaux de détection d'empilement.

29. Le circuit selon la revendication 9, dans lequel les moyens destinés à corriger chaque impulsion (P1) à traiter qui précède l'impulsion (P2) qui est empilée, et les moyens destinés à corriger chaque impulsion (P2) qui est empilée comprennent:

a) des moyens d'enregistrement (586) comprenant une table à consulter pour des signaux de correction qui sont fonction d'échantillons de queue restants, et ayant une entrée et une sortie; et

b) des moyens multiplicateurs (570, 574) ayant une première entrée (588, 594) connectée à la sortie des moyens d'enregistrement (586) et une seconde entrée (568, 572) pour chaque impulsion à corriger, pour multiplier les impulsions par les signaux de correction;

dans lequel l'entrée des moyens d'enregistrement est destinée à recevoir l'instant initial (τ1) d'échantillonnage, l'instant initial (τ2) de l'impulsion (P2) qui est empilée, le nombre enregistré d'échantillons de l'impulsion, jusqu'au dernier échantillon qui précède l'apparition de l'impulsion (P2) qui est empilée, le nombre enregistré d'échantillons d'une impulsion échantillonnée précédemment, et le nombre d'échantillons de l'impulsion qui est empilée, et la table à consulter est conçue de façon à fournir les signaux de correction.

30. Le circuit selon la revendication 29, dans lequel les moyens destinés à enregistrer des échantillons comprennent:

a) un compteur d'échantillons (346) connecté aux moyens destinés à échantilloner chaque impulsion; et

b) des moyens d'enregistrement (350) connectés au compteur d'échantillons pour enregistrer le compte d'échantillons et qui comportent une sortie; et

dans lequel la sortie des moyens d'enregistrement pour le compte d'échantillons est connectée à l'entré des moyens d'enregistrement pour des signaux de correction.

31. Le circuit selon la revendication 29, dans lequel les moyens destinés à mesurer l'instant initial (τ1) d'échantillonnage et l'instant initial (τ2) de l'impulsion (P2) qui est empilée comprennent en outre:

a) un oscillateur (322) qui produit une première série d'impulsions ayant une première fréquence de répétition d'impulsions;

b) un compteur/diviseur de fréquence (356) connecté à l'oscillateur et qui produit à partir de la première série d'impulsions des seconde et troisième séries d'impulsions ayant des seconde et troisième fréquences de répétition d'impulsions qui sont des sous-multiples de la première fréquence de répétition d'impulsions;

c) un premier registre (350) qui est connecté au compteur/diviseur de fréquence pour mémoriser les états des première, seconde et troisième séries d'impulsions à l'instant initial (τ2) d'échantillonnage, et qui comporte une sortie; et;

d) un second registre (384) qui est connecté au compteur/diviseur de fréquence pour mémoriser les états des première, seconde et troisième séries d'impulsions à l'instant initial (τ2) de l'impulsion (P2) qui est empilée, et qui comporte une sortie; et

dans lequel les sorties des premier et second registres sont connectées à l'entré des moyens d'enregistrement pout les signaux de correction.

32. Un détecteur de radiations pour des événements de radiation comprenant:

a) un cristal scintillateur qui produit des événements de scintllation sous la dépendance d'événements de radiation que reçoit ce cristal scintillateur;

b) des moyens (10) connectés au cristal scintillateur pour convertir les événements de scintillation en impulsions électriques analogiques correspondantes; et

c) un circuit pour détecteur et traiter les impulsions dans des situations d'empilement d'impulsions, qui contient des moyens pour échantillonner chaque impulsion,

caractérisé en ce que le circuit de détection et de traitement comprend:

c1) des moyens (200) pour échantillonner chaque impulsion avec une seconde fréquence qui est un sous-multiple d'une première frèquence;

c2) des moyens (350) pour mesurer l'instant iitial (τ1) d'échantillonnage, en synchronisme avec les première et seconde fréquences;

c3) des moyens (346) pour compter le nombre d'échantillons après l'instant initial (τ1) d'échantillonnage;

c4) des moyens (396) pour enregistrer ce nombre d'échantillons;

c5) des moyens (384) pour mesurer, en synchronisme avec les première et seconde fréquences, l'instant initial (τ2) d'une impulsion (P2) qui est empilée sur une impulsion précédente (P1), dans une situation d'empilement d'impulsions détectée;

c6) des moyens pour corriger l'impulsion précédente (P1) en ajoutant aux échantillons de l'impulsion précédente (P1), après l'instant initial (τ2), des échantillons de queue correspondants, reconstitués à partir d'échantillons enregistrés précédemment d'une autre impulsion précédente (P0);

c7) des moyens pour corriger l'impulsion (P2) qui est empilée, en soustrayant de cette impulsion (P2) les échantillons de queue qui ont été ajoutés à l'impulsion précédente.

33. Un détecteur de radiations selon la revendication 32, consistant en une gamme-caméra à scintillations, dans lequel les moyens (10) pour convertir les événements de scintillation en signaux électriques analogiques correspondants contiennent des moyens pour produire des premiers (24) et seconds (26) signaux de coordonnées de position, et au moins un signal d'énergie totale (22), et dans lequel les moyens pour corriger chaque impulsion (P1) qui précède l'impulsion (P2) qui est empilée, et les moyens pour corriger l'impulsion (P2) qui est empilée corrigent le signal d'énergie totale.

EP 0 166 169 B1

FIG 1A

FIG 1B

FIG 2

FIG 3

FIG 4

FIG 5

EP 0 166 169 B1

PULSE PILE - UP
DETECTOR
154

EVENT DETECTOR

158 F

450 — 146 ET

PULSE PILE-UP DETECTOR
452 — 148 PP

160 APP

FROM
A 24
Z SUM — 156

454 — 150 D1

HIGH LEVEL DETECTOR

456 — 152 D2

PILE-UP LOW LEVEL
DETECTOR

FROM/TO
46

FIG 6

FIG 7

FIG 8

INPUT LINES

| | 534 | 532 | 530 |
|---|---|---|---|
| CY1 | $Z_{s1}$ | $X_{s1}$ | $Y_{s1}$ |
| CY2 | $T_1, N_1, N_0$ | $E_{s1}$ | $Z_{s1}$ |
| CY1 | $Z_{s2}$ | $X_{s2}$ | $Y_{s2}$ |
| CY2 | $T_2, N_2, N_1$ | $E_{s2}$ | $Z_{s2}$ |

OUTPUT LINES

| | 540 | 538 | 536 |
|---|---|---|---|
| | $Z_{s1}$ | $X_{p1} = \dfrac{X_{s1}}{Z_{s1}}$ | $Y_{p1} = \dfrac{Y_{s1}}{Z_{s1}}$ |
| | $Z_{s1}$ | $E_{p1}$ | $Z_{s1}$ |
| | $Z_{s2}$ | $X_{p2} = \dfrac{X_{s2}}{Z_{s2}}$ | $Y_{p2} = \dfrac{Y_{s2}}{Z_{s2}}$ |
| | $Z_{s2}$ | $E_{p2}$ | $Z_{s2}$ |

| | | | |
|---|---|---|---|
| TO 266 | $Y_{p1}$ | $X_{p1}$ | $E_{p1}$ |
| | $Y_{p2}$ | $X_{p2}$ | $E_{p2}$ |

FIG 9

9

FIG 10

FIG 11